# EUROPEAN PATENT SPECIFICATION

(11) **EP 3 531 269 B1**
(45) Date of publication and mention of the grant of the patent: **23.06.2021**
(21) Application number: 19158254.3
(22) Date of filing: 20.02.2019
(51) Int. Cl.: G06F 3/12

(54) **PRINTING DATA GENERATION DEVICE, PRINTING DATA GENERATION METHOD, STORAGE MEDIUM, AND PRINTING DATA GENERATION PROGRAM**
DRUCKDATENERZEUGUNGSVORRICHTUNG, DRUCKDATENERZEUGUNGSVERFAHREN UND DRUCKDATENERZEUGUNGSPROGRAMM
DISPOSITIF DE GÉNÉRATION DE DONNÉES D'IMPRESSION, PROCÉDÉ DE GÉNÉRATION DE DONNÉES D'IMPRESSION, SUPPORT DE STOCKAGE ET PROGRAMME DE GÉNÉRATION DE DONNÉES D'IMPRESSION

(30) Priority: 22.02.2018 JP 2018029503
(43) Date of publication of application: 28.08.2019
(73) Proprietor: SCREEN Holdings Co., Ltd., Kyoto 602-8585 (JP)
(72) Inventor: IZAWA, Yo, Kyoto, Kyoto 602-8585 (JP); KATO, Takako, Kyoto, Kyoto 602-8585 (JP); ONOGAWA, Yoshihiko, Kyoto, Kyoto 602-8585 (JP)
(74) Representative: Goddar, Heinz J.

(56) References cited:
- US-A1- 2006 082 793
- US-A1- 2017 039 459

## Description

### BACKGROUND

The present disclosure relates to a printing data generation device generating printing data to be provided to a printer that performs printing on a printing sheet (e.g., continuous sheet), a printing data generation method for generating such printing data, a storage medium, and a printing data generation program.

Generally in a printing system performing printing for bookbinding, flatplan designing is performed before printing data is generated based on submission data. Flatplan designing is to specify positions of a plurality of pages on a printing sheet. Information on the resultant flatplan is generally stored as a template (hereinafter, referred to as a "flatplan template"). In the step of executing a rasterization process (RIP process) on the submission data, a position of each of the pages, included in the submission data, on the printing sheet is determined based on the flatplan template. As a result, in the case where cut sheets are to be used for the printing, a plurality of pages are printed on one printing sheet. In the case where a continuous sheet is to be used for the printing, a plurality of pages are printed on a region corresponding to one printing sheet (one-unit printing region). A printed item obtained as described above is subjected to a bookbinding process, and as a result, a booklet, a brochure, a pamphlet or the like is produced. In this specification, the term "booklet" encompasses a pamphlet, a brochure and the like. The term "booklet" and the term "book" are used exchangeably.

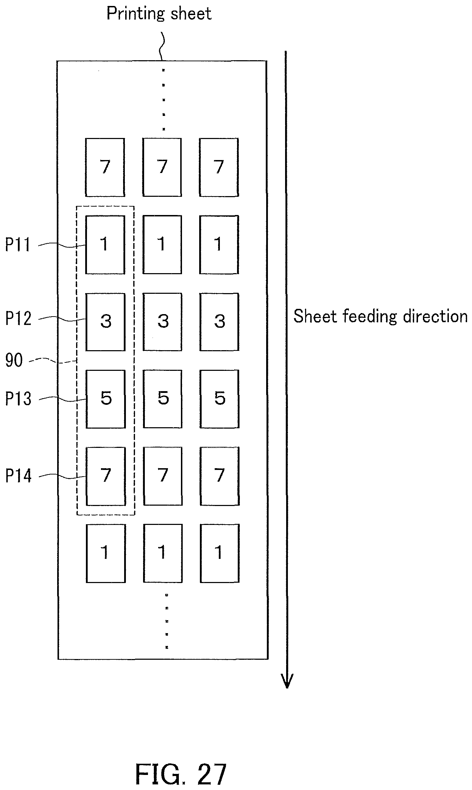

Recently, a demand for book printing, namely, printing of, typically, a relatively small number of copies of a booklet or the like by a digital printer, is increasing. For such book printing, the following method is occasionally used. A continuous sheet is used as the printing sheet. After printing is performed on such a sheet, the sheet is cut into one-page sheets as seen form a front surface or a rear surface. A plurality of such one-page sheets are stacked to form one booklet or the like. (Hereinafter, such a method will be referred to as a "cut and stack method".) FIG. 27 schematically shows a printing sheet to be used for the book printing performed by the cut and stack method. FIG. 27 shows positions of the pages, to form the booklet, on the printing sheet. In FIG. 27, the numerical figures in the printing sheet are page numbers. FIG. 27 shows a front surface of the printing sheet. Even-numbered pages are located on a rear surface of the printing sheet. After the printing, the printing sheet is cut in a longitudinal direction and a lateral direction in FIG. 27, and a plurality of the post-cutting sheets are stacked to form one booklet. In the example shown in FIG. 27, for example, the plurality of pages (sheets) enclosed by the dashed line indicated by reference sign 90 form one booklet.

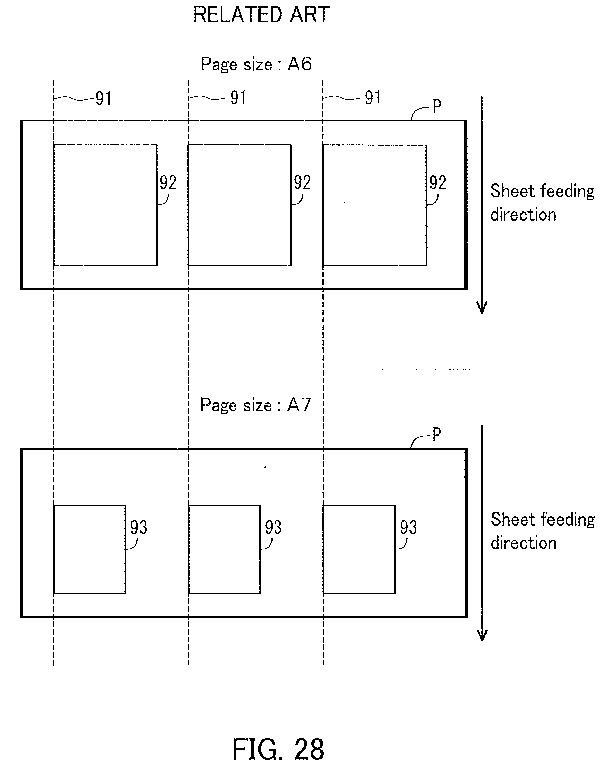

In the above-described book printing, printing and bookbinding processes for a plurality of booklets of different page sizes (e.g., A6-size booklets and A7-size booklets) may be performed on one line in a plant. Currently, in such a case, flatplan designing is performed for each of the page sizes in order to make it unnecessary to re-adjust a post-processing device (more specifically, in order to make it unnecessary to re-adjust a position of a cutter that cuts the printing sheet when the process for booklets of one page size is switched to the process for booklets of another page size) (hereinafter, such a technique of flatplan designing will be referred to as a "common technique"). In the case where this common technique is used to, for example, print A6-size booklets and A7-size booklets on a continuous sheet by one printer, the printing results shown in FIG. 28 are obtained. Hereinafter, a region in a printing sheet that corresponds to a one-unit printing region in the printing performed on a continuous sheet will be referred to as a "unit printing sheet". A unit printing sheet P has a size in the lateral direction that is approximately equal to a size in the lateral direction of the continuous sheet. FIG. 28 schematically shows the results of the printing performed on the unit printing sheet P for both of the A6-size booklets and the A7-size booklets. In FIG. 28, the dashed line indicated by reference sign 91 represents positions along which the printing sheet is to be cut by the post-processing device after the printing is performed. The rectangles indicated by reference sign 92 represent printing regions of the pages of the A6-size booklets. The rectangles indicated by reference sign 93 represent printing regions of the pages of the A7-size booklets. In the example shown in FIG. 28, the cutting positions 91 on the unit printing sheet P for the A6-size booklets and the cutting positions 91 on the unit printing sheet P for the A7-size booklets match each other. Therefore, the post-processing device does not need to be re-adjusted between the printing and bookbinding process for the A6-size booklets and the printing and bookbinding process for the A7-size booklets.

Japanese Laid-Open Patent Publication No. 2008-155632 describes a method for automatically imposing a plurality of images on a printing sheet with no need to prepare a template for each of the page sizes. According to this method, the time required for a prepress work in the execution of jobs for various page sizes is shortened. Japanese Laid-Open Patent Publication No. 2002-175165 describes an information processing device that provides an N-page printing function, by which a logical page is located at the center of each of regions obtained by equally dividing a physical sheet into N (N is an integer greater than of 1).

However, the above-described common technique requires a great number of flatplan templates to be prepared in correspondence with the pages sizes. This raises the management cost. In addition, the operator needs to choose a flatplan template corresponding to the page size of each submission data, which requires time and effort.

The method described in Japanese Laid-Open Patent Publication No. 2008-155632 and the information processing device described in Japanese Laid-Open Patent Publication No. 2002-175165 require the post-processing device to be re-adjusted in the case where the printing and bookbinding processes for a plurality of booklets of different page sizes are to be performed on one line.

US2006/082793 A1 discloses methods and apparatus for adaptive imposition templates. An object underlying the invention disclosed in said document is to allow a preexisting imposition template to be used with the document having a finished page size different from the page size specified in the preexisting template. One template is used for a plurality of documents having different page sizes. Coordinates of an actual page are determined using the nominal imposition template (preexisting template). When each coordinate of the actual page is determined, the spine-binding edge separation is preserved. Namely, the length from the vertical binding edge to the edge of each actual page is equal to the length from the vertical binding edge to the edge of each nominal page. In particular said document discloses that the position of each actual page (each page of the printing data to be processed) is determined such that various clearance defined by the preexisting template are preserved.

### SUMMARY

The present disclosure has an object of realizing a printing data generation device that generates printing data usable to perform printing and processing to form a plurality of booklets of different page sizes on one line with no need to re-adjust a post-processing device and is operable at low cost, a printing data generation method for generating such printing data at low cost, a storage medium, and a printing data generation program.

A first disclosure is directed to a printing data generation device generating printing data, to be supplied to a printer that performs printing on a printing sheet, based on submission data, the printing data generation device comprising:
a layout acquisition portion configured to acquire a layout including a page position region of each of pages in a second direction perpendicular to a first direction, which is a printing sheet feeding direction, the page position region being on a unit printing sheet, which is a one-unit printing region;
a page position determination portion configured to determine an actual position of each of the pages on the unit printing sheet when the printing is performed by the printer, the actual position being determined based on the page position region of each of the pages and the submission data;
an overall imposition information generation portion configured to generate overall imposition information that specifies an imposition layout of all pages to be printed by the printer, the overall imposition information being generated based on the actual position of each of the pages determined by the page position determination portion and the submission data; and
a rasterization processing portion configured to execute a rasterization process on the submission data based on the overall imposition information to generate the printing data;
wherein the page position determination portion changes a size of the page position region in accordance with a second direction length of each of the pages included in the submission data while fixing one end or the other end, in the second direction, of the page position region as a fixed end, and determines the actual position of each of the pages on the unit printing sheet, and wherein regarding each of the pages on the unit printing sheet, the same end of the one end or the other end, in the second direction, of the page position region is regarded as the fixed end.

According to a second disclosure, preferably, in the first disclosure, the page position region has a maximum page 5 size allowed to be allocated as a one-page region on the unit printing sheet based on a second direction length of the unit printing sheet and the number of the pages allocated to the unit printing sheet; and
the page position determination portion reduces the size of the page position region in accordance with the second direction length of each of the pages included in the submission data, and determines the actual position of each of the pages on the unit printing sheet.

According to a third disclosure, preferably, in the first or second disclosure, a bleed region is provided around the page position region, the bleed region being provided around four sides of each of the pages when the printing is performed by the printer; and
where a region in the unit printing sheet that is outer to one end, in the first direction, of each of the pages is defined as a first margin region, the printing data generation device further comprises a unit printing sheet size reduction portion configured to remove the entirety of, or a part of, a region of the first margin region other than the bleed region and shorten a first direction length of the unit printing sheet.

According to a fourth disclosure, preferably, in the first or second disclosure, a bleed region is provided around the page position region, the bleed region being provided around four sides of each of the pages when the printing is performed by the printer; and
where a region in the unit printing sheet that is outer to one end, in the first direction, of each of the pages is defined as a first margin region, the printing data generation device further comprises a unit printing sheet size reduction portion configured to shorten a first direction length of the unit printing sheet by a length corresponding to a difference between a first direction length of each of the pages held by the layout acquisition portion and a first direction length of each of the pages included in the submission data.

According to a fifth disclosure, preferably, in any of the first through fourth disclosures,
the submission data is to continuously print first job data for printing of a page of a first page size and second job data for printing of a page of a second page size, different from the first page size, on the printing sheet by the printer; and
the page position determination portion changes a size of the page position region in accordance with a second direction length of the first page size while fixing one end or the other end, in the second direction, of the page position region as a fixed end, and determines the actual position of each of the pages included in the first job data on the unit printing sheet; and changes a size of the page position region in accordance with a second direction length of the second page size while fixing an end of the page position region on the same side as the fixed end, and determines the actual position of each of the pages included in the second job data on the unit printing sheet.

According to a sixth disclosure, preferably, in any of the first through fifth disclosures,
the printing data generation device further comprises a template holding portion configured to hold the layout as a template,
the page position determination portion determines the actual position of each of the pages on the unit printing sheet when the printing is performed by the printer, based on a template corresponding to the submission data among templates held by the template holding portion and the submission data.

A seventh disclosure is directed to a printing data generation method for generating printing data, to be supplied to a printer that performs printing on a printing sheet, based on submission data, the printing data generation method comprising:
a layout reading step of reading a layout including a page position region of each of pages in a second direction perpendicular to a first direction, which is a printing sheet feeding direction, the page position region being on a unit printing sheet, which is a one-unit printing region;
a page position determination step of determining an actual position of each of the pages on the unit printing sheet when the printing is performed by the printer, the actual position being determined based on the layout read in the layout reading step and the submission data;
an overall imposition information generation step of generating overall imposition information that specifies an imposition layout of all pages to be printed by the printer, the overall imposition information being generated based on the actual position of each of the pages determined in the page position determination step and the submission data; and
a rasterization step of executing a rasterization process on the submission data based on the overall imposition information to generate the printing data,
wherein in the page position determination step, a size of the page position region is changed in accordance with a second direction length of each of the pages included in the submission data while one end or the other end, in the second direction, of the page position region is fixed as a fixed end, and the actual position of each of the pages on the unit printing sheet is determined, and wherein regarding each of the pages on the unit printing sheet, the same end of the one end or the other end, in the second direction, of the page position region is regarded as the fixed end.

An eighth disclosure is directed to a non-transitory computer-readable storage medium having, stored thereon, a printing data generation program generating printing data, to be supplied to a printer that performs printing on a printing sheet, based on submission data, the printing data generation program causing a CPU of a computer to execute, by use of a memory:
a layout reading step of reading a layout including a page position region of each of pages in a second direction perpendicular to a first direction, which is a printing sheet feeding direction, the page position region being on a unit printing sheet, which is a one-unit printing region;
a page position determination step of determining an actual position of each of the pages on the unit printing sheet when the printing is performed by the printer, the actual position being determined based on the layout read in the layout reading step and the submission data;
an overall imposition information generation step of generating overall imposition information that specifies an imposition layout of all pages to be printed by the printer, the overall imposition information being generated based on the actual position of each of the pages determined in the page position determination step and the submission data; and
a rasterization step of executing a rasterization process on the submission data based on the overall imposition information to generate the printing data,
wherein in the page position determination step, a size of the page position region is changed in accordance with a second direction length of each of the pages included in the submission data while one end or the other end, in the second direction, of the page position region is fixed as a fixed end, and the actual position of each of the pages on the unit printing sheet is determined, and wherein regarding each of the pages on the unit printing sheet, the same end of the one end or the other end, in the second direction, of the page position region is regarded as the fixed end.

A ninth disclosure is directed to a printing data generation program generating printing data, to be supplied to a printer that performs printing on a printing sheet, based on submission data, the printing data generation program causing a CPU of a computer to execute, by use of a memory:
a layout reading step of reading a layout including a page position region of each of pages in a second direction perpendicular to a first direction, which is a printing sheet feeding direction, the page position region being on a unit printing sheet, which is a one-unit printing region;
a page position determination step of determining an actual position of each of the pages on the unit printing sheet when the printing is performed by the printer, the actual position being determined based on the layout read in the layout reading step and the submission data;
an overall imposition information generation step of generating overall imposition information that specifies an imposition layout of all pages to be printed by the printer, the overall imposition information being generated based on the actual position of each of the pages determined in the page position determination step and the submission data; and
a rasterization step of executing a rasterization process on the submission data based on the overall imposition information to generate the printing data,
wherein in the page position determination step, a size of the page position region is changed in accordance with a second direction length of each of the pages included in the submission data while one end or the other end, in the second direction, of the page position region is fixed as a fixed end, and the actual position of each of the pages on the unit printing sheet is determined, and wherein regarding each of the pages on the unit printing sheet, the same end of the one end or the other end, in the second direction, of the page position region is regarded as the fixed end.

According to the present disclosure, the actual position of each of the pages on the unit printing sheet on which the printing is to be performed is defined in a region obtained by the page position region of each of the pages included in the layout being changed in accordance with the second direction length of the page included in the submission data while one end or the other end, in the second direction, of each of the page position regions is fixed. Namely, as long as the same layout is used as the layout for the unit printing sheet, one end of each actual page on the unit printing sheet is located at one same position regardless of the page size in the submission data. Therefore, as long as the same layout is used, the position at which the unit printing sheet is to be cut after the printing is performed is a certain fixed position. For this reason, as long as the same layout is used, a printed item having data printed thereon based on printing data created by the printing data generation device according to the present disclosure may be cut properly with no need to re-adjust the cutting position in the first direction of the unit printing sheet (cutting position when the unit printing sheet is to be cut in a direction parallel to the sheet feeding direction) even if the page size is changed. Therefore, the printing data generation device according to the present disclosure is operable at low cost.

### BRIEF DESCRIPTION OF THE DRAWINGS

FIG. 1 is a block diagram showing an overall structure of a printing system including a printing data generation device according to embodiment 1 of the present disclosure.
FIG. 2 is a flowchart showing an overview of a bookbinding process using the printing data generation device according to embodiment 1.
FIG. 3 is a schematic view showing an example of printed item having data printed thereon by a printer (printing device compatible to a continuous sheet) in embodiment 1.
FIG. 4 is a schematic view showing an example of printed item having data printed thereon by the printer (printed item obtained as a result of cutting in a Y direction) in embodiment 1.
FIG. 5 is a schematic view showing an example of printed item having data printed thereon by the printer (printed item obtained as a result of cutting in the Y direction) in embodiment 1.
FIG. 6 is a schematic view showing an example of printed item having data printed thereon by the printer (printed item obtained as a result of cutting in the Y direction and subsequent cutting in an X direction) in embodiment 1.
FIG. 7 is a schematic view showing an example of structure of the printer in embodiment 1.
FIG. 8 is a block diagram showing a hardware configuration of the printing data generation device according to embodiment 1.
FIG. 9 is a block diagram showing a functional structure of the printing data generation device according to embodiment 1.
FIG. 10 shows an example of basic designing screen for flatplan designing in embodiment 1.
FIG. 11 shows an example of detailed designing screen for flatplan designing in embodiment 1.
FIG. 12 shows a folding catalog "F2-1" in embodiment 1.
FIG. 13 shows positions of pages on a unit printing sheet in embodiment 1.
FIG. 14 shows actual positions of pages on the unit printing sheet in embodiment 1.
FIG. 15 is a flowchart showing a process of generating flatplan information in embodiment 1.
FIG. 16 shows actual positions of pages on the unit printing sheet in embodiment 1.
FIG. 17 shows actual positions of pages on the unit printing sheet in embodiment 1.
FIG. 18 shows actual positions of pages on the unit printing sheet in embodiment 1.
FIG. 19 shows actual positions of pages on the unit printing sheet in embodiment 1.
FIG. 20 is a schematic view showing overall imposition information in embodiment 1.
FIG. 21 is a flowchart showing a procedure of a printing data generation process in embodiment 1.
FIG. 22 is a flowchart showing a procedure of a printing data generation process in embodiment 1 in the case where book printing of A6-size booklets and book printing of A7-size booklets are performed on one line in a plant.
FIG. 23 is a view showing a margin cut process in modification 1 of embodiment 1.
FIG. 24 is a view showing a margin cut process in modification 2 of embodiment 1.
FIG. 25 is a block diagram showing a functional structure of a printing data generation device according to embodiment 2 of the present disclosure.
FIG. 26 is a flowchart showing a procedure of a printing data generation process in embodiment 2 in the case where book printing of A6-size booklets and book printing of A7-size booklets are performed on one line in a plant.
FIG. 27 is a schematic view showing book printing performed by a cut and stack method.
FIG. 28 shows a common technique.

### DETAILED DESCRIPTION

Hereinafter, embodiments of the present disclosure will be described with reference to the attached drawings. In the following embodiments, an example in which book printing is performed by the cut and stack method will be described. Regarding the size of a unit printing sheet and pages, the size in a sheet feeding direction Y (first direction) will be referred to as a "longitudinal size", and the size in a sheet width direction X (second direction) will be referred to as a "lateral size". The longitudinal size corresponds to a "first direction length", and the lateral size corresponds to a "second direction length". The sheet width direction is perpendicular to the sheet feeding direction. The "unit printing sheet" is a region in a printing sheet that corresponds to a one-unit printing region in the printing performed on a continuous sheet.

### <1. Embodiment 1>

### <1.1 Overall structure of the printing system>

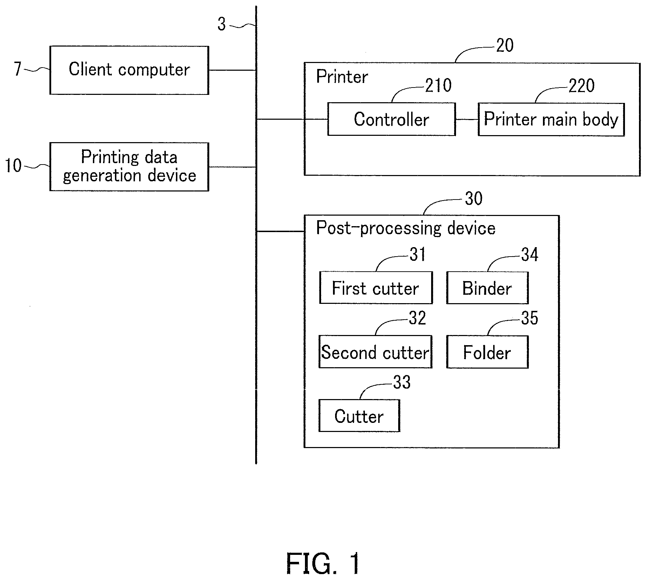

FIG. 1 is a block diagram showing an overall structure of a printing system including a printing data generation device 10 according to embodiment 1 of the present disclosure. This printing system includes a client computer 7 generating and holding data on a printing target or holding data on a printing target transmitted from an external device, a printing data generation device 10 receiving data on a printing target as submission data and executing a data process such as an RIP process (rasterization process) or the like on the submission data to generate printing data, a printer 20 performing color printing based on the printing data, and a post-processing device 30 performing cutting of a printing sheet or the like after the printing. The printer 20 includes a printer main body 220 and a controller 210. The post-processing device 30 includes a first cutter 31 cutting a continuous sheet, having data printed thereon (continuous printed item), in the sheet feeding direction Y to provide a plurality of post-cutting continuous printed items, a second cutter 32 cutting the post-cutting continuous printed items in the sheet width direction X (cutting off a margin region SR while leaving a page region PR and a bleed region BR) to provide a plurality of cut sheets, a cutter 33 cutting off an unnecessary region (region including the bleed region BR and the margin region SR) from each of the cut sheets, a binder 34 binding the plurality of cut sheets, having the unnecessary region cut off, in units of a book to provide books, and a folder 35 folding the continuous printed items in the sheet feeding direction Y. A detailed structure of the post-processing device 30 is not shown.

The printer 20 includes the printer main body 220 and the controller 210. The client computer 7, the printing data generation device 10, the printer 20 and the post-processing device 30 are communicably connected with each other via a network 3 such as a LAN or the like. In this embodiment, the printer 20 is a printing device capable of performing printing on a continuous sheet such as a rolled sheet or the like (continuous printing). The post-processing device 30 does not need to be communicably connected with the client computer 7, the printing data generation device 10 or the printer 20.

### <1.2 Overview of the bookbinding process using the printing system>

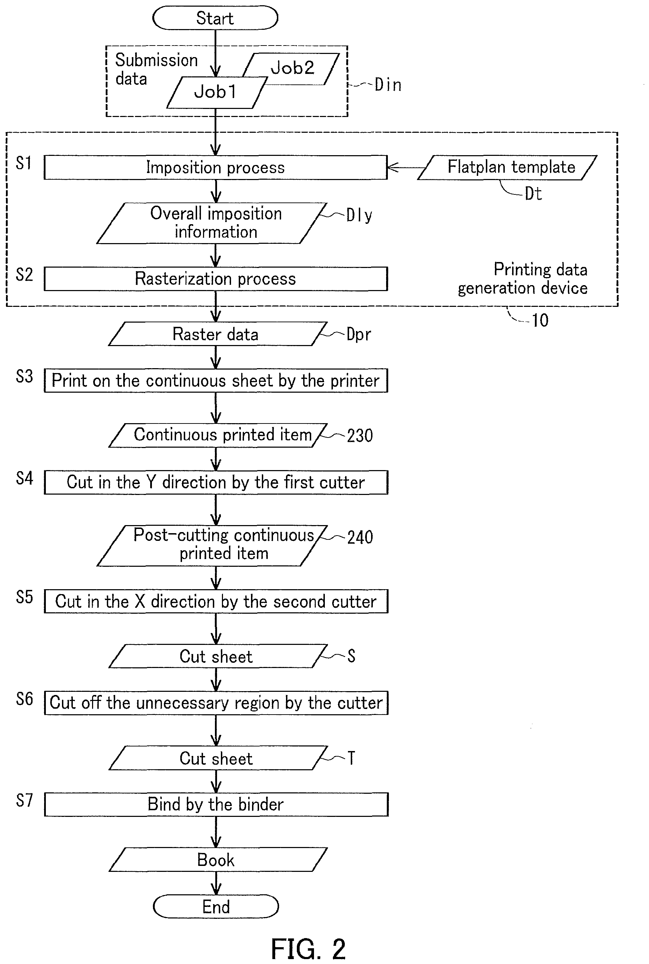

FIG. 2 is a flowchart showing an overview of a typical bookbinding process using the printing system shown in FIG. 1. Submitted data Din is supplied to the printing data generation device 10. The submission data Din includes a plurality of print job data Job1 and Job2. First print job data Job1 (first job data) and second print job data Job2 (second job data) are printing data for production of books of different page sizes. For example, the first print job data Job1 is data for printing of pages of the A6-size (first size), and the second print job data Job2 is data for printing of pages of the A7-size (second size). When the submission data Din is supplied to the printing data generation device 10, the printing data generation device 10 refers to a flatplan template Dt to sequentially locate printing images based on the plurality of print job data Job1 and Job2 on a continuous sheet (printing sheet) 22 to generate overall imposition information Dly (step S1).

The printing data generation device 10 rasterizes the overall imposition information Dly, namely, executes a rasterization process of generating raster data Dpr, based on which the printer 20 performs printing on the continuous sheet 22 using the print the job data (step S2).

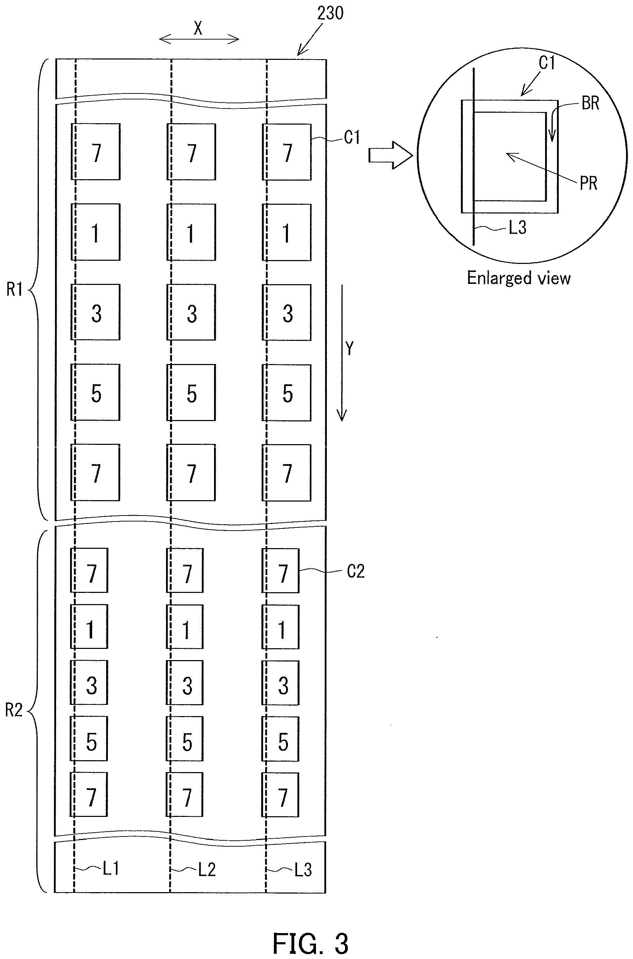

The printer 20 performs printing on the continuous sheet 22 based on the raster data Dpr (step S3). As a result, a continuous printed item 230 as shown in FIG. 3 is created. As described below in detail, the continuous printed item 230 includes a first printing region R1 corresponding to the first print job data Job1 and a second printing region R2 corresponding to the second print job data Job2, which are arrayed in the sheet feeding direction Y. On the first printing region R1, a plurality of page cells C1 are printed based on the first print job data Job1. On the second printing region R2, a plurality of page cells C2 are printed based on the second print job data Job2, In FIG. 3, the numerical figures "1", "3", "5" and "7" assigned to the page cells C (C1 and C2) are printing page numbers of the respective page cells. The printing page numbers are not actually printed.

As shown in the enlarged view in FIG. 3, each of the page cells C includes a region to be a printed item in a final stage of the printing (page region PR) and a bleed region BR around the page region PR. In the bleed region BR, an accessory such as an alignment mark, a cut mark, a barcode or the like is formed. The page size of the page cell C1 is larger than the page size of the page cell C2 because the page size of the page to be obtained in the final stage is larger in the former than in the latter. Namely, the A6-size pages are produced from the page cells C1, and the A7-size pages are produced from the page cells C2.

The page region PR included in each page cell C1 and the page region PR included in each page cell C2 are located such that positions of the same ends (left sides) thereof match each other in the sheet width direction X.

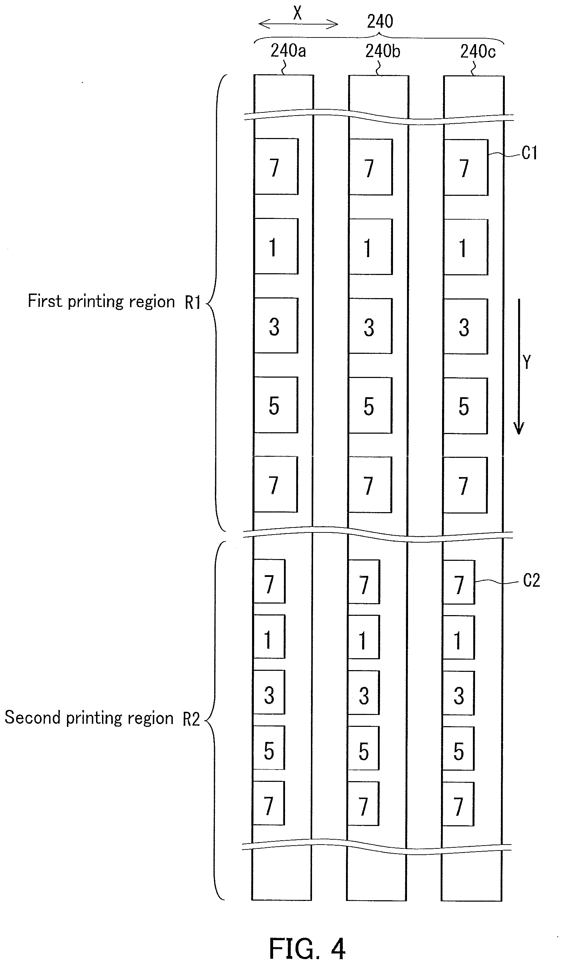

After step S3 in FIG. 2, the first cutter 31 cuts the continuous printed item 230 in the sheet feeding direction Y, more specifically, along longitudinal cutting lines L1, L2 and L3 shown in FIG. 3 (step S4). As shown in the enlarged view in FIG. 3, the longitudinal cutting line L (LI, L2, L3) extends along the left sides of the page regions PR of the page cells C. As a result of step S4, the continuous printed item 230 is cut into post-cutting continuous printed items 240a, 240b and 240c, which are lengthy in the sheet feeding direction Y (see FIG. 4). The longitudinal cutting lines L1, L2 and L3 merely need to extend along the sides of the page regions PR in the sheet feeding direction Y, and may be along the left sides or the right sides of the page regions PR.

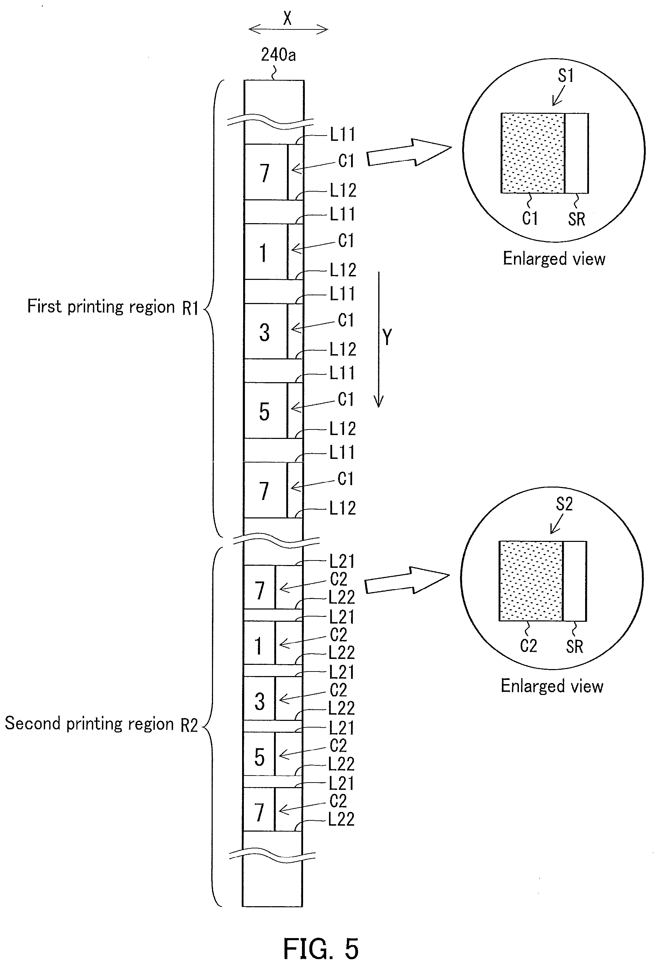

The second cutter 32 cuts the post-cutting continuous printed items 240 in the sheet width direction X to form a plurality of cut sheets S (SI and S2) (step S5). More specifically, as shown in FIG. 5, the second cutter 32 cuts the post-cutting continuous printed items 240a, 240b and 240c (FIG. 5 shows only the post-cutting continuous printed item 240a) in the first printing region R1 along lateral cutting lines L11 and L12 respectively extending along a top side and a bottom side of each of the page cells C1 to form a cut sheet S1 for each page cell C1. One cut sheet S1 includes one page cell C1 and a margin region SR to the right of, and adjacent in the sheet width direction X to, the page cell C1 (see the enlarged view in FIG. 5). Similarly, the second cutter 32 cuts the post-cutting continuous printed items 240a, 240b and 240c in the second printing region R2 along lateral cutting lines L21 and L22 respectively extending on a top side and a bottom side of each of the page cells C2 to form a cut sheet S2 for each page cell C2. One cut sheet S2 includes one page cell C2 and a margin region SR to the right of, and adjacent in the sheet width direction X to, the page cell C2.

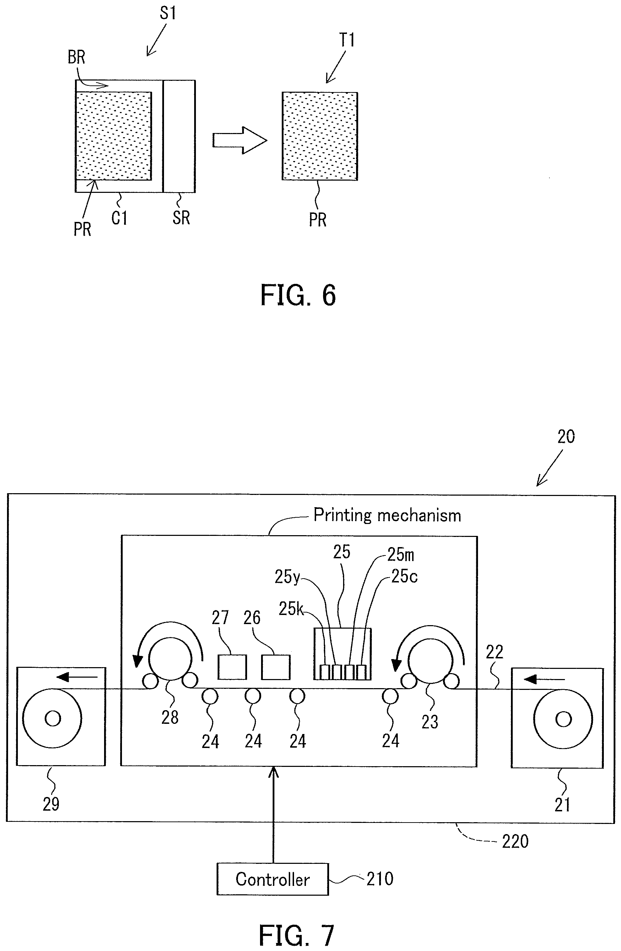

The cutter 33 cuts off an unnecessary region including the bleed region BR and the margin region SR from each cut sheet S to create a cut sheet T (T1, T2) formed of the page region PR (step S6) (see FIG. 6).

In a final step, the binder 34 binds a plurality of the cut sheets T1 in units of a book to provide books and binds a plurality of the cut sheets T2 in units of a book to provide books (step S7). The bookbinding flow shown in FIG. 2 is merely an example. For example, before the cutter 33 performs the cutting step (step S6) of cutting off the unnecessary region, the binder 34 may bind the cut sheets and then the cutter 33 may cut off the unnecessary region. Similarly, before the cutter 33 performs the cutting step (step S6) of cutting off the unnecessary region, there may be another step of folding the continuous printed items in the sheet feeding direction Y by the folder 35.

FIG. 7 is a schematic view showing an example of structure of the printer (inkjet printing device) 20 in this embodiment. As described above, the printer 20 includes the printer main body 220 and the controller 210.

The printer main body 220 includes a sheet feeding portion 21 feeding the printing sheet (e.g., rolled sheet) as a base substrate, first driving rollers 23 transporting the printing sheet 22 into a printing mechanism, a plurality of support rollers 24 transporting the printing sheet 22 inside the printing mechanism, a printing portion 25 injecting ink onto a surface of the printing sheet 22 to perform printing, a drier 26 drying the post-printing printing sheet 22, an inspection portion 27 inspecting the state of printing on the printing 22, second driving rollers 28 outputting the printing sheet 22 from the printing mechanism, and a sheet winding portion 29 winding the post-printing printing sheet 22. As can be seen, the printing sheet 22 is transported in a certain transportation direction by the first driving rollers 23 and the second driving rollers 28 from the sheet feeding portion 21 toward the sheet winding portion 29. The printing portion 25 includes a C inkjet head 25c, an M inkjet head 25m, a Y inkjet head 25y and a K inkjet head 25k respectively injecting C (cyan) ink, M (magenta) ink, Y (yellow) ink and K (black) ink.

In the case where the printing is to be performed on both of two surfaces of the printing sheet 22, two such printing mechanisms shown in FIG. 7 are coupled with each other via a known inversion unit. In this case, a first printing mechanism performs the printing on a front surface of the printing sheet 22. Then, the printing sheet 22 is turned upside down by the inversion unit, and a second printing mechanism performs the printing on a rear surface of the printing sheet 22.

The controller 210 controls an operation of the printer main body 220 having the above-described structure. Upon receipt of a command of print output, the controller 210 controls the operation of the printer main body 220 so as to transport the printing sheet 22 from the sheet feeding portion 21 to the sheet winding portion 29. While the printing sheet 22 is being transported, first, the inkjet heads 25c, 25m, 25y and 25k in the printing portion 25 inject ink to perform the printing, next, the drier 26 dries the printing sheet 22, and then, the inspection portion 27 inspects the printing state.

In this example, the printer 20 performing color printing is described. The present disclosure is also applicable to a case where a printer performing monochrome printing is adopted. The colors usable for the printing are not limited to the four colors of CMYK, and may include a spot color such as green, orange or the like. The printing system is not limited to the inkjet system, and may be a toner system, a liquid toner system or the like.

### <1.3 Structure of the printing data generation device>

### <1.3.1 Hardware configuration>

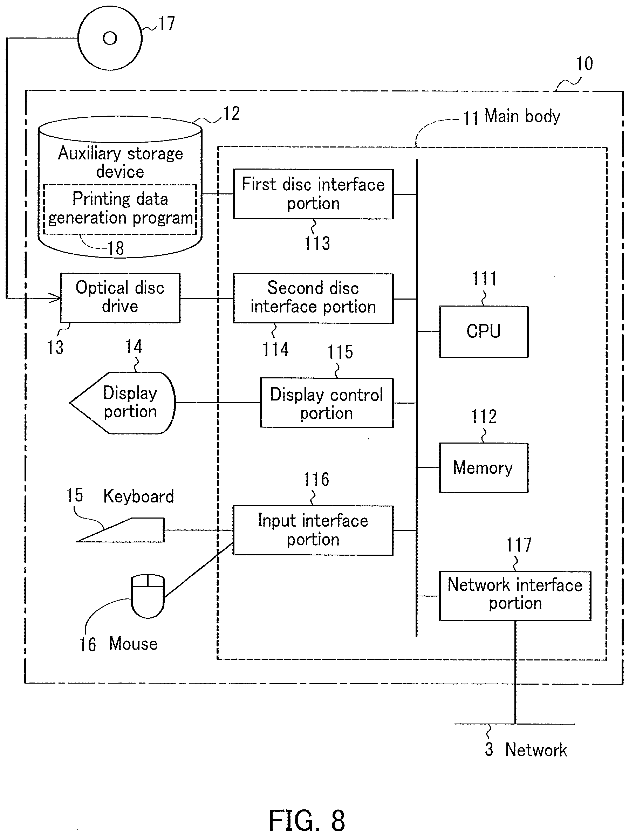

FIG. 8 is a block diagram showing a hardware configuration of the printing data generation device 10. As shown in FIG. 8, the printing data generation device 10 includes a main body 11, an auxiliary storage device 12, an optical disc drive 13, a display portion 14, a keyboard 15, a mouse 16, and the like. The main body 11 includes a CPU 111, a memory 112, a first disc interface portion 113, a second disc interface portion 114, a display control portion 115, an input interface portion 116, and a network interface portion 117. The CPU 111, the memory 112, the first disc interface portion 113, the second disc interface portion 114, the display control portion 115, the input interface portion 116 and the network interface portion 117 are connected with each other via a system bus. The first disc interface portion 113 is connected with the auxiliary storage device 12. The second disc interface portion 114 is connected with the optical disc drive 13. The display control portion 15 is connected with the display portion (display device) 14. The input interface portion 116 is connected with the keyboard 15 and the mouse 16. The network interface portion 117 is connected with the network 3. The auxiliary storage device 12 is a magnetic disc drive or the like. An optical disc 17 as a computer-readable storage medium such as a DVD (Digital Versatile Disc), a CD-ROM (Compact Disc Read Only Memory) or the like is inserted into the optical disc drive 13. The display portion 14 is a liquid crystal display or the like. The display portion 14 is used to display information desired by an operator. The keyboard 15 and the mouse 16 are used by the operator to input an instruction to the printing data generation device 10.

The auxiliary storage device 12 has stored thereon a printing data generation program 18 causing execution of a process of generating printing data from submission data (printing data generation process). The CPU 111 realizes various functions of the printing data generation device 10 by reading into the memory 112, and executing, the printing data generation program 18 stored on the auxiliary storage device 12. The memory 112 includes a RAM (Random Access Memory) and a ROM (Read Only Memory). The memory 112 acts as a work area in which the CPU 111 executes the printing data generation program 18 stored on the auxiliary storage device 12. The printing data generation program 18 is provided as being stored on a computer-readable storage medium (non-transitory computer-readable storage medium) such as a DVD or the like described above. Namely, a user, for example, inserts the optical disc 17 as a storage medium of the printing data generation program 18 into the optical disc drive 13 after purchasing the optical disc 17, and causes the printing data generation program 18 to be read from the optical disc 17 and installed onto the auxiliary storage device 12. Alternatively, the user may cause the printing data generation program 18, transmitted via the network 3, to be received by the network interface portion 117 and installed onto the auxiliary storage device 12.

### <1.3.2 Functional structure>

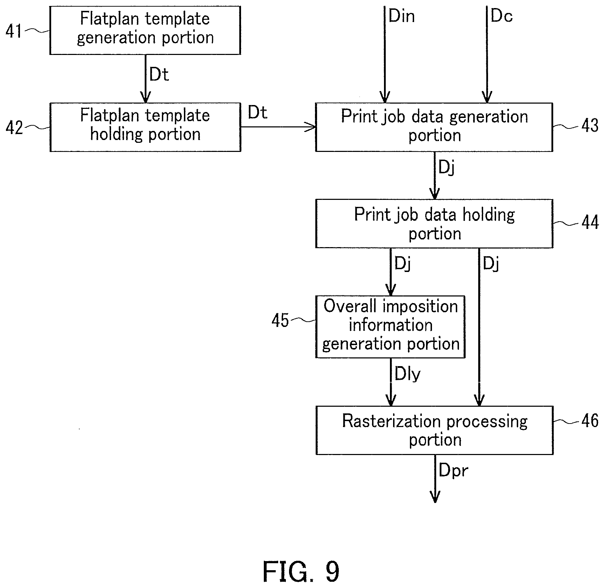

FIG. 9 is a block diagram showing a functional structure of the printing data generation device 10 in this embodiment. As shown in FIG. 9, the printing data generation device 10 functionally includes a flatplan template generation portion 41, a flatplan template holding portion 42, a print job data generation portion 43, a print job data holding portion 44, an overall imposition information generation portion 45, and a rasterization processing portion 46.

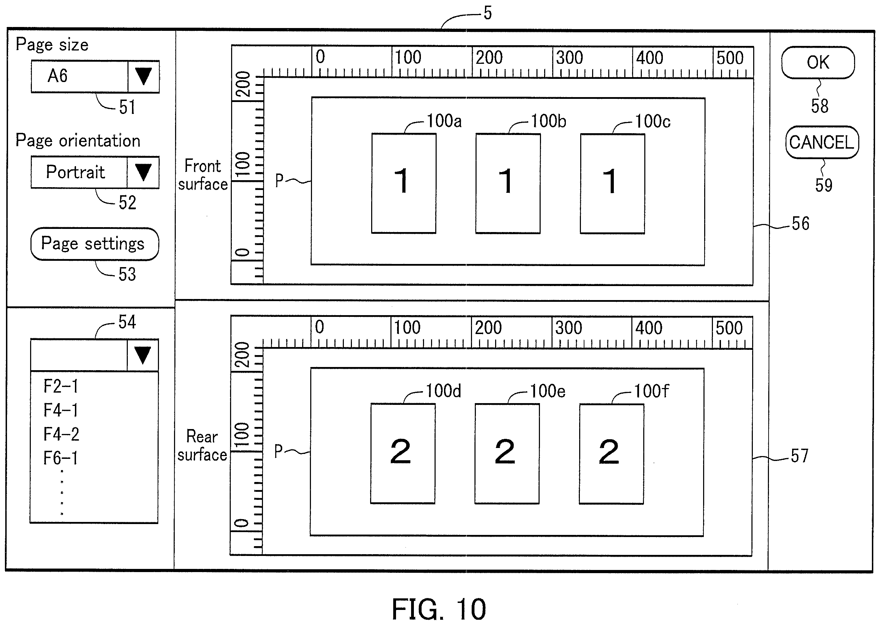

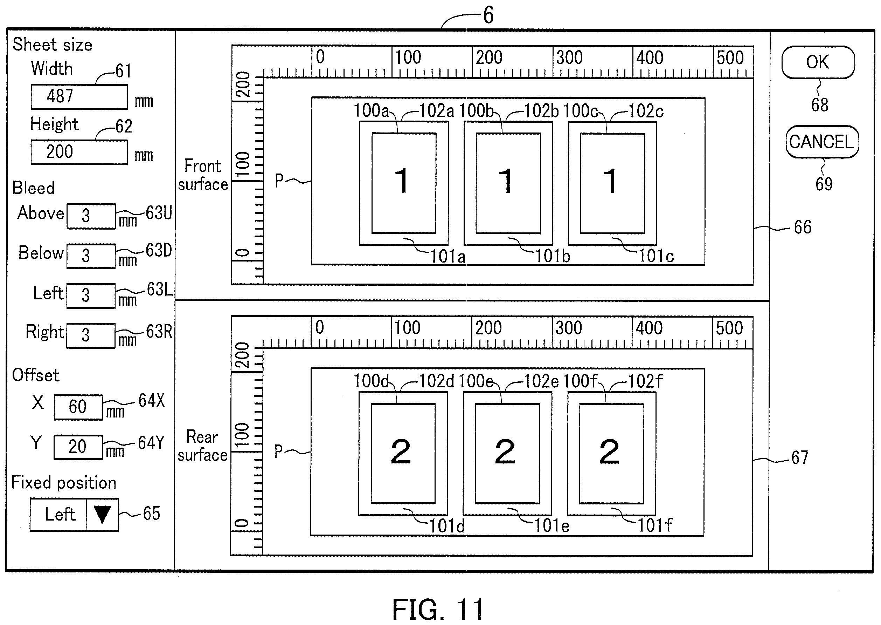

The flatplan template generation portion 41 displays, on the display portion 14, a flatplan designing screen as an operation screen on which the above-described flatplan designing is to be performed, and generates a flatplan template Dt based on an operation made by the operator to the flatplan designing screen (i.e., based on the contents of the flatplan designing). In this embodiment, the flatplan designing screen includes a basic designing screen 5 as shown in FIG. 10 and a detailed designing screen 6 as shown in FIG. 11. The basic designing screen 5 and the detailed designing screen 6 are switchable by, for example, selecting a tab (not shown in FIG. 10 or FIG. 11) provided at an end of the screen. A sheet size of the unit printing sheet P displayed on the basic designing screen 5 is assumed to be specified by a different screen in advance.

As shown in FIG. 10, the basic designing screen 5 includes a dropdown list 51 to be used to select a page size, a dropdown list 52 to be used to select a page orientation, a page setting button 53 to be used to make various detailed settings, a dropdown list 54 to be used to select a folding catalog, a front surface layout display region 56 displaying a layout on the front surface of the unit printing sheet P, a rear surface layout display region 57 displaying a layout on the rear surface of the unit printing sheet P, an OK button 58 to be used to save the contents of the settings, and a CANCEL button 59 to be used to cancel the contents of the settings. The front surface layout display region 56 includes page position regions 100a through 100c representing the positions of the plurality of page regions PR (see FIG. 3, FIG. 5 and FIG. 6) on the front surface of the unit printing sheet P. The rear surface layout display region 57 includes page position regions 100d through 100f representing the positions of the plurality of page regions PR on the rear surface of the unit printing sheet P. The "folding catalog" defines a pattern of folding to be used to fold the printed items after the printing. From the dropdown list 54, a folding catalog conformed to the standards defined by CIP4, which is the International Cooperation for the Integration of Processes in Prepress, Press and Postpress Organization, is selectable.

Immediately after the basic designing screen 5 is displayed in order to create a new flatplan template Dt, neither the page size nor the page orientation has been selected (it should be noted that there may be default settings), and no page is located on the unit printing sheet P on the front surface layout display region 56 or the rear surface layout display region 57. On the basic designing screen 5 and the detailed designing screen 6, the unit printing sheet P is displayed in the landscape orientation, in which the sheet feeding direction Y is in the vertical direction and the sheet width direction X is in the horizontal direction. In this state, the operator selects a page size from the dropdown list 51, and selects the page orientation from the dropdown list 52. The information on the page sizes selectable from the dropdown list 51 includes information on the longitudinal size and information on the lateral size. For example, in the case where the page orientation is the portrait orientation, the information that the page size is A6 includes information that the longitudinal size is 148 mm and information that the lateral size is 105 mm. In the case of wishing to designate a page size other than the page sizes selectable from the dropdown list 51, the operator may press the page setting button 53 to designate the longitudinal size and the lateral size as the page size. The page size selected in this step is desirably a size representing a maximum region (maximum page size) allowed to be allocated as a one-page region based on the sheet size of the unit printing sheet P and the number of the pages to be allocated to the unit printing sheet P, but is not limited to such a size. The page size is designated by the basic designing screen 5 as described above, so that the maximum value of the longitudinal size and the maximum value of the lateral size of the pages to be located on the unit printing sheet P are determined.

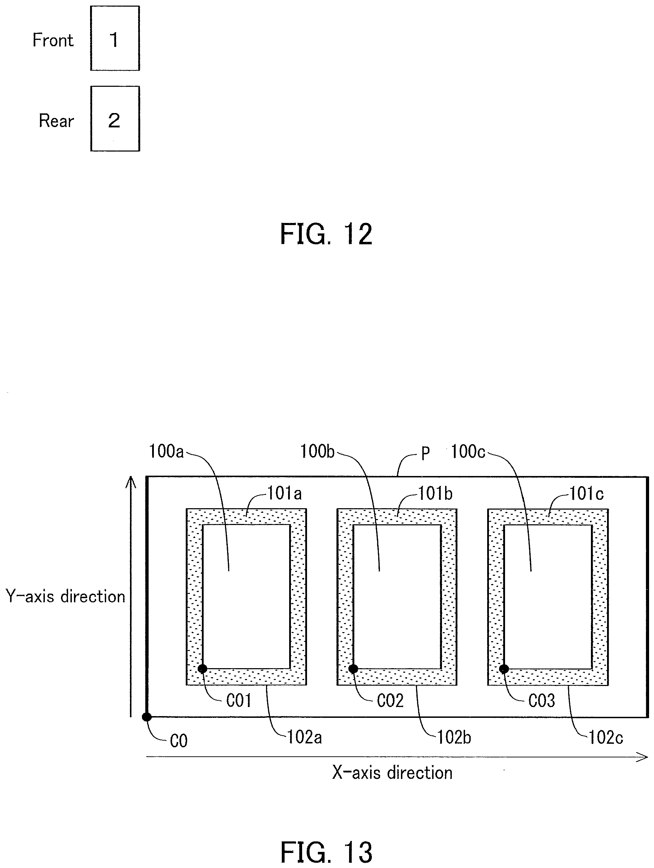

After selecting the page size and the page orientation, the operator selects one folding catalog from the dropdown list 54, and makes a drag-and-drop operation from the region of the dropdown list 54 into the front surface layout display region 56. In the case where, as in this embodiment, the book printing is performed by the cut and stack method, the folding catalog named "F2-1" is selected. The pattern of the folding catalog "F2-1" is defined as shown in FIG. 12. According to this pattern, page 1 is located on the front surface of a sheet, and page 2 is located on the rear surface of this sheet. The operator repeats the drag-and-drop operation by the number of the pages to be located on the unit printing sheet P. For example, when the drag-and-drop operation is performed three times in the state where the folding catalog "F2-1" is selected, the basic designing screen 5 is as shown in FIG. 10. Specifically, three page position regions 100a through 100c are located on the unit printing sheet P on the front surface layout display region 56, and three page position regions 100d through 100f are located on the unit printing sheet P on the rear surface layout display region 57.

In this embodiment, a common page size is designated for all the pages to be located on the unit printing sheet P. Alternatively, different page sizes may be allowed to be designated for different columns on the basic designing screen 5. For example, the page sizes to be designated for the plurality of page position regions 100a through 100c do not need to be the same as each other. In this case, however, a margin cut process described below needs to be performed on the basis of the maximum page size among the page sizes to be located on the unit printing sheet P at the time of actual printing.

As shown in FIG. 11, the detailed designing screen 6 includes a text box 61 to be used to designate the width (lateral size) of the unit printing sheet P, a text box 62 to be used to designate the height (longitudinal size) of the unit printing sheet P, text boxes 63U, 63D, 63L and 63R to be used to designate sizes of bleed position regions 101a through 101f provided above, below, to the left, and to the right of the page position regions 100a through 100f, text boxes 64X and 64Y to be used to designate "offsets in the X direction and the Y direction" that specify distances from a predetermined reference position (in this embodiment, the bottom left coordinate of the unit printing sheet P) to each of the page position regions 100a through 100c, a dropdown list 65 to be used to select a fixed position based on which the page size is changed, a front surface layout display region 66 displaying a layout on the front surface of the unit printing sheet P, a rear surface layout display region 67 displaying a layout on the rear surface of the unit printing sheet P, an OK button to be used to save the contents of the region settings, and a CANCEL button 69 to be used to cancel the contents of the region settings. The front surface layout display region 66 includes the page position regions 100a through 100c, the bleed position regions 101a through 101c, and page cell position regions 102a through 102c. The rear surface layout display region 67 includes the page position regions 100d through 100f, the bleed position regions 101d through 101f, and page cell position regions 102d through 102f. The fixed position will be described below in detail.

Immediately after the detailed designing screen 6 is displayed to create the new flatplan template Dt (immediately after the basic designing screen 5 is switched to the detailed designing screen 6), the sheet size is a pre-designated size. Neither the sizes of the bleed position regions 101a through 101f nor the offsets have been designated (it should be noted that there may be default settings). The fixed position has not been selected (it should be noted that as the default, the fixed position may be set to, for example, "left" for all the pages). The display state of the front surface layout display region 66 is the same as the display state of the front surface layout display region 56 immediately therebefore, and the display state of the rear surface layout display region 67 is the same as the display state of the rear surface layout display region 57 immediately therebefore. In this state, the operator designates the sizes of the bleed regions (inputs values to the text boxes 63U, 63D, 63L and 63R), designates the offsets (inputs values to the text boxes 64X and 64Y), and selects the fixed position from the dropdown list 65 when necessary.

Now, with reference to FIG. 13, the positions of each page on the unit printing sheet P will be described. First, the bottom left coordinate C01 of the page to be located at the leftmost position in FIG. 13 among the pages to be located on the unit printing sheet P is defined based on the offsets designated by use of the text boxes 64X and 64Y in the detailed designing screen 6. In the example shown in FIG. 11, a bottom left coordinate C01 is the coordinate of a position that is distanced from a reference position C0 (bottom left coordinate of the unit printing sheet P) by 60 mm in the sheet width direction X and by 20 mm in the sheet feeding direction Y. Next, bottom left coordinates C02 and C03 of the pages other than the page located at the leftmost position in FIG. 13 are defined based on the width of the unit printing sheet P (value of the text box 61 in the detailed designing screen 6), the bottom left coordinate C01, and the number of the pages to be located on the unit printing sheet P. The bottom left coordinates C02 and C03 are defined such that the pages are located with an appropriate interval. Then, as shown in FIG. 13, the bleed position regions 101a through 101c having the widths of the values designated by use of the text boxes 63U, 63D, 63L and 63R in the detailed designing screen 6 are provided around the page position regions 100a through 100c. In this manner, the bleed position regions 101a through 101c are added around the page position regions 101a through 101c. As a result, the positions of the page cell position regions 102a through 102c, which represent the positions of the page cells C on the front surface of the unit printing sheet P (see FIG. 3, FIG. 5 and FIG. 6), are determined. Although not shown, positions of the page cell position regions 102d through 102f, which represents the positions of the page cells C on the rear surface of the unit printing sheet P, are determined in a similar manner.

Alternatively, the bottom left coordinate C02 of the page position region 100b to be located at the center of the unit printing sheet P and the bottom left coordinate C03 of the page position region 100c to be located at the rightmost position of the unit printing sheet P may be input by use of the text boxes 64X and 64Y. The values representing the widths of the bleed position regions 101b and 101c may be designated by use of the text boxes 63U, 63D, 63L and 63R.

When the OK button 58 of the basic designing screen 5 or the OK button 68 of the detailed designing screen 6 is pressed, the flatplan template Dt is generated based on the contents of the settings in the flatplan designing screen (the basic designing screen 5, the detailed designing screen 6), and is stored on the flatplan template holding portion 42. Namely, the flatplan template holding portion 42 holds the flatplan template Dt generated by the flatplan template generation portion 41.

The print job data generation portion 43 acquires the submission data Din, the flatplan template Dt corresponding to the submission data Din, and information Dc on the number of copies (number of copies on which the submission data Dt is to be printed), and generates print job data Dj, which is a group of data required to execute one print job. The print job data Dj includes the submission data Din, various information including the information Dc on the number of copies, and flatplan information specifying the actual position of each page on the unit printing sheet P when the printing is performed by the printer 20.

In the printing system according to this embodiment, it is not assumed that the flatplan template Dt is prepared for each page size, as is assumed by the above-described common technique. This will be described by way of a unit printing sheet P of a certain sheet size. Typically, the flatplan template Dt is prepared for each number of pages to be located on the unit printing sheet P. Therefore, for example, the flatplan template Dt created for the A6 page size may be used to generate print job data Dj based on the submission data Din for the A7 page size. In such a case, in order to generate the printing data Dpr by rasterizing the submission data Din, information that specifies a part of each page cell position region 102, defined in the flatplan template Dt, in which each of the plurality of pages included in the submission data Din is to be located is necessary. In other words, information that specifies how the actual page cell position regions 102 are arranged on the unit printing sheet P is necessary. This information is the above-described flatplan information. Namely, the print job data generation portion 43 acquires the submission data Din and the flatplan template Dt corresponding to the submission data Din, and determines, based on the submission data Din and the flatplan template Dt, the actual position of each of the pages on the unit printing sheet P when the printing is performed by the printer 20. Then, the print job data generation portion 43 generates the information on the determined positions as the flatplan information. The flatplan template Dt is acquired from the flatplan template holding portion 42, which holds the layout as the flatplan template Dt, so that the layout already created for the unit printing sheet P is reusable. Therefore, the layout is designated easily.

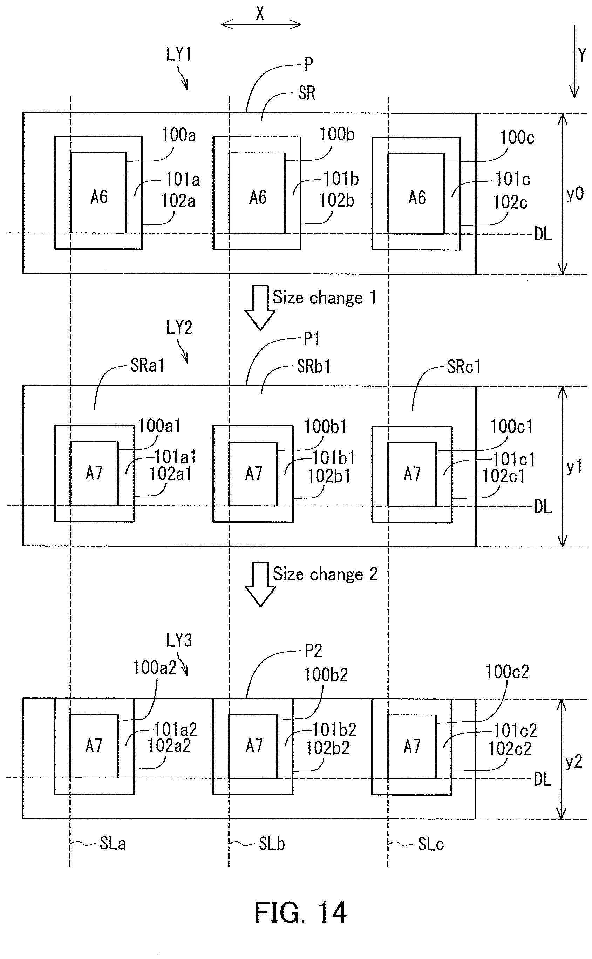

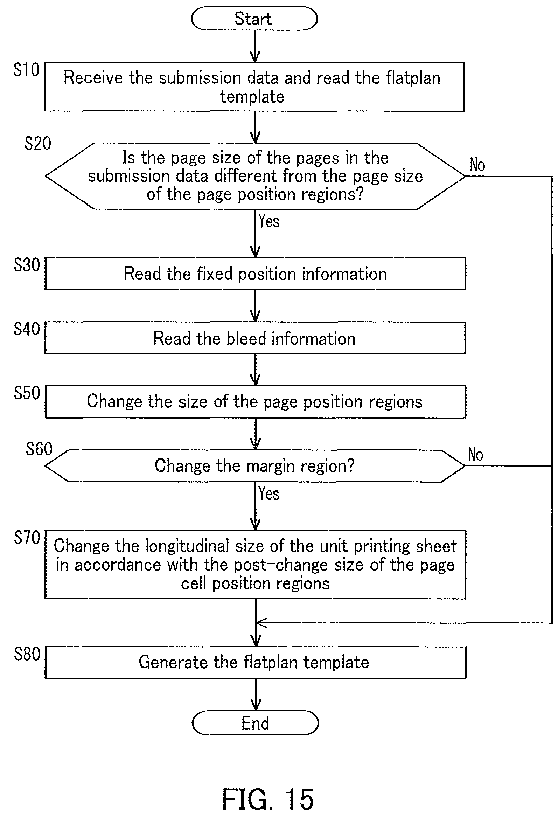

Now, with reference to FIG. 9 (block diagram), FIG. 14 (process diagram) and FIG. 15 (flowchart), how the actual position of each of the page cells C on the unit printing sheet P is determined in the case where the page size of each page included in the submission data Din and the page size of each page position region 100 designated by the flatplan template Dt are different from each other will be described. In this example, it is assumed that the page size of each page included in the submission data Din is A7 and that the page size of each page position region 100 designated by the flatplan template Dt is A6. The procedure shown in the flowchart of FIG. 15 realizes an example of the printing data generation method.

FIG. 14 is a process diagram showing a work of allocating page data on each of the pages included in the submission data Din to the unit printing sheet P in three stages. FIG. 14 shows a layout LY1, a layout LY2 and a layout LY3. The layout LY1 is a layout of the page cell position regions 102a through 102c, designated by the flatplan template Dt, on the front surface of the unit printing sheet P. The layout LY2 is a layout obtained after the size of the page cell position regions 102a through 102c in the layout LY1 is changed to provide page cell position regions 102a1 through 102c1. The change from the layout LY1 to the layout LY2 will be referred to as "size change 1". The layout LY3 is a layout obtained after the size of the unit printing sheet P1 in the layout LY2 is changed to provide the page printing sheet P2. The change from the layout LY2 to the layout LY3 will be referred to as "size change 2".

FIG. 14 schematically shows the layout LY1 designated by the flatplan template Dt. As described above, the page cell position regions 102a through 102c are located on the unit printing sheet P, and the page cell position regions 102a through 102c respectively include the page position regions 100a through 100c and the bleed position regions 101a through 101c. It is assumed that the longitudinal size of the unit printing sheet P designated by the flatplan template Dt is y0. It is assumed that in the process of template designing, "left" is designated as the fixed position.

In a state where the flatplan template Dt is held by the flatplan template holding portion 42 (see FIG. 9), the print job data generation portion 43 receives the submission data Din. The print job data generation portion 43 reads the flatplan template Dt corresponding to the received submission data Din from the flatplan template holding portion 42 (step S10 in FIG. 15).

The print job data generation portion 43 extracts the page size of each of the pages, included in the submission data Din, from the submission data Din, and compares the extracted page size against the page size of each of the page position regions 100a through 100c in the flatplan template Dt (step S20). In the case where these page sizes are the same as each other, the process advances to step S80, where flatplan information in accordance with the initial flatplan template Dt is generated (the flatplan information is generated with no change in the size of the page position regions or the like). By contrast, in the case where these page sizes are different from each other, the process advances to step S30 in order to change the size of the page position regions 100a through 100c. In this example, the page size of the page position regions 100a through 100c in the flatplan template Dt is A6, whereas the page size of the pages included in the submission data Din is A7. Therefore, it is determined "Yes" in step S20, and the process advances to step S30.

The print job data generation portion 43 reads "fixed position information" (information set by use of the dropdown list 65 in the detailed designing screen 6) from the flatplan template holding portion 42 (step S30), and then reads "bleed information" (step S40). The "bleed information" includes the values of the widths of the bleed position regions 101a through 101c designated by the text boxes 63U, 63D, 63L and 63R in the detailed designing screen 6 shown in FIG. 11.

The print job data generation portion 43 determines the size and the positions of the page cell position regions 102a1 through 102c1 shown in the layout LY2 in FIG. 14 from the page size of each of the pages included in the submission data Din, the fixed position information, and the bleed information (step S50). In this example, since the page size has been changed from A6 to A7, the size of the initial page position regions 100a through 100c is changed from A6 to A7. The fixed position information represents that the fixed position is set to "left". Therefore, while left side positions SLa through SLc of the initial page position regions 100a through 100c are fixed as fixed ends, the page position regions 100a1 through 100c1 of the pages corresponding to the submission data Din are located on the unit printing sheet PI, such that post-size change left sides match the left side positions SLa through SLc, and such that a post-size change bottom line DL matches a bottom line DL of the initial page position regions 100a through 100c,.

Next, the bleed position regions 101a1 through 101c1 are located around the pages position regions 100a1 through 100c1 based on the bleed information.

As a result, as shown in the layout LY2 in FIG. 14, the positions of the page cell position regions 102a1 through 102c1 on the unit printing sheet P1 are determined.

Next, the process advances to step S60. As a result of the "size change 1" executed from the layout LY1 in FIG. 14 to the layout LY2 in FIG. 14, margin regions SRal through SRc1 having a relatively large width is made between the top side of the page cell position regions 102a1 through 102c1 and the top side of the unit printing sheet P1.

In step S60, it is determined whether or not to execute the "size change 2" from the layout LY2 in FIG. 14 to the layout LY3 in FIG. 14 based on the longitudinal size of the margin regions SRal through SRc1. In the case where, for example, the longitudinal size of the margin regions SRal through SRc1 is of at least a predetermined threshold value, it is determined "Yes" in step S60, and the process advances to step S70. In the case where the longitudinal size of the margin regions SRal through SRc1 is of less than the predetermined threshold value, it is determined "No" in step S60, and the process advances to step S80.

In step S70, in a state where the size and the positions of the page cell position regions 102a1 through 102c1 are maintained, the longitudinal size of the unit printing sheet P1 is shortened from "y1" to "y2". As a result, the layout LY3 in FIG. 14 is obtained, and this information is saved as the flatplan information. After the execution of the process in step S70, the position of the top side of the unit printing sheet P is set on the basis of the page cell position region located at the uppermost position among the plurality of page cell position regions 102a2 through 102c2. For example, the top side of the unit printing sheet P is matched to the uppermost top side among the top sides of the plurality of page cell position regions 102a2 through 102c2. Alternatively, the top side of the unit printing sheet P may be matched to a position slightly above the uppermost top side among the top sides of the plurality of page cell position regions 102a2 through 102c2. In this manner, a first margin region except for the bleed position regions 101a1 through 101c1 is entirely or partially removed to shorten the longitudinal size of the unit printing sheet P. The "first margin region" is defined as a region, in the unit printing sheet P, that is outer to one end, in the sheet feeding direction Y, of each of the pages.

As described above, in this embodiment, the longitudinal size of the unit printing sheet P is shortened when necessary. Therefore, the width of the unnecessary region to be cut by the cutter 33 is shortened (see step S6 in FIG. 2 and FIG. 6). This suppresses the amount of the sheet to be wasted. Namely, since the margin region of the unit printing sheet P is decreased, the amount of the sheet to be wasted is decreased.

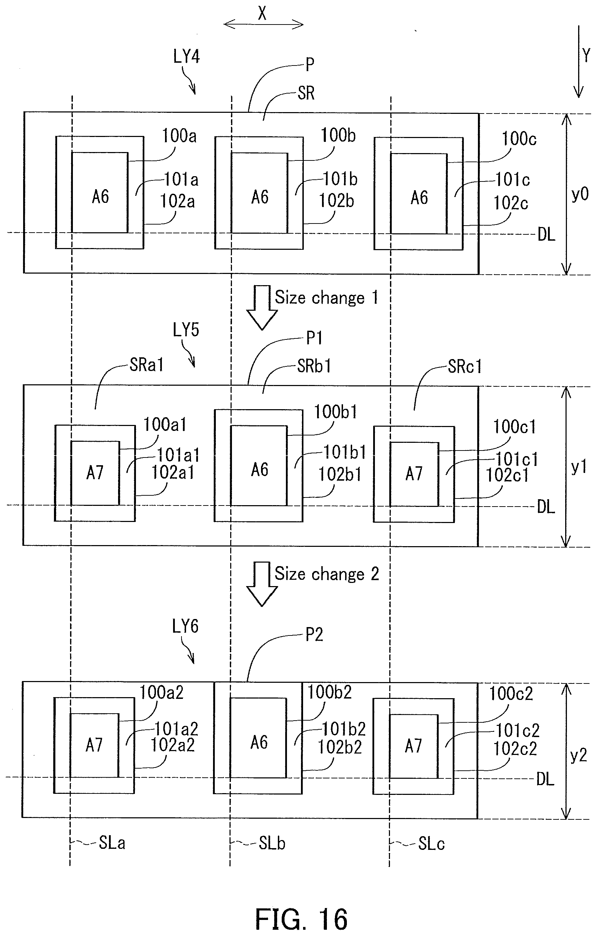

FIG. 16 is a process diagram in the case where submission data Din including pages of a plurality of different page sizes is supplied. In this example, A7-size page data is supplied for a left column and a right column, and A6-size page data is supplied for a central column. In this example, the size of the page cell position regions 102a and 102c of the left column and the right column is decreased by the "size change 1" from a layout LY4 to a layout LY5, whereas the size of the page cell position regions 102b in the central column is not decreased. In the "size change 2" from the layout LY5 to a layout LY6 in FIG. 16, the longitudinal size of the unit printing sheet P1 is changed from y1 to y2 on the basis of the uppermost top side among the top sides of the page cell position regions 102a1 through 102c1 obtained by the "size change 1" (specifically, on the basis of the top side of the page cell position region 102b1).

As described above, in this embodiment, the amount of size change of the page cell position regions 102 is determined for each column. Therefore, the printing is performed on pages of different page sizes in different columns arranged side by side.

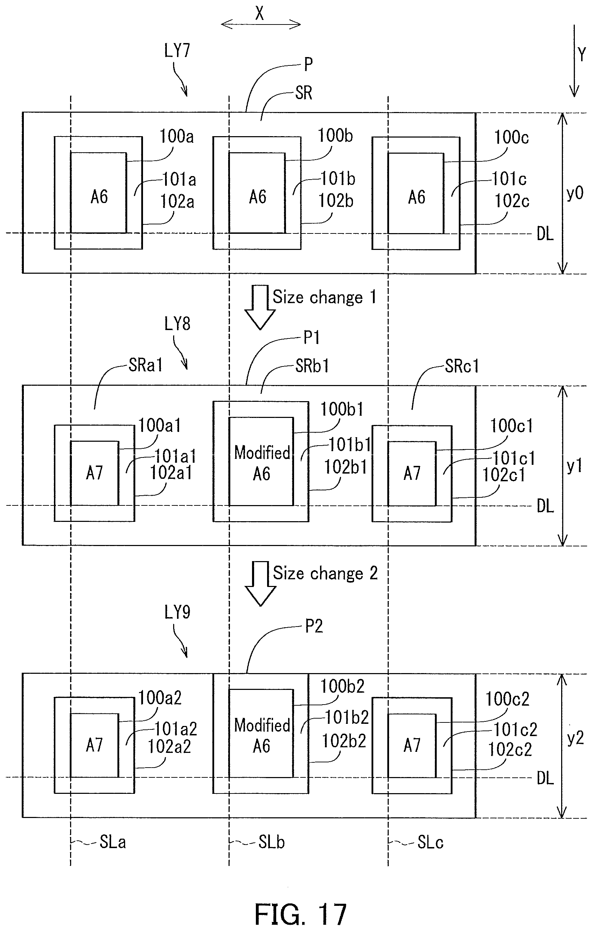

The "size change 1" is not limited to decreasing the size of the page cell position regions 102. The size of the page cell position regions 102 may be increased by the "size change 1" within the range of the size of the margin region SR between the top side of the unit printing sheet P in the flatplan template Dt and the top side of each page cell position region 102 and within the range of the size of an interval in the X direction between adjacent page cell position regions 102. In the example shown in FIG. 17, a job for a modified A6 size, which is larger than the A6 size, is designated for the central column. In accordance with this, the "size change 1" is executed from a layout LY7 to a layout LY8 in FIG. 17 for the central column. As a result, the size of the page position region 100b corresponding to the A6 size is increased to the size of the page position region 100b1 corresponding to the modified A6 size, and the size of the page cell position region 102b is increased to the size of the page cell position region 102b1. In addition, the "size change 2" is executed from the layout LY8 to a layout LY9 in FIG. 17, so that the longitudinal size of the unit printing sheet P is shortened from the initial longitudinal size y0 to y2.

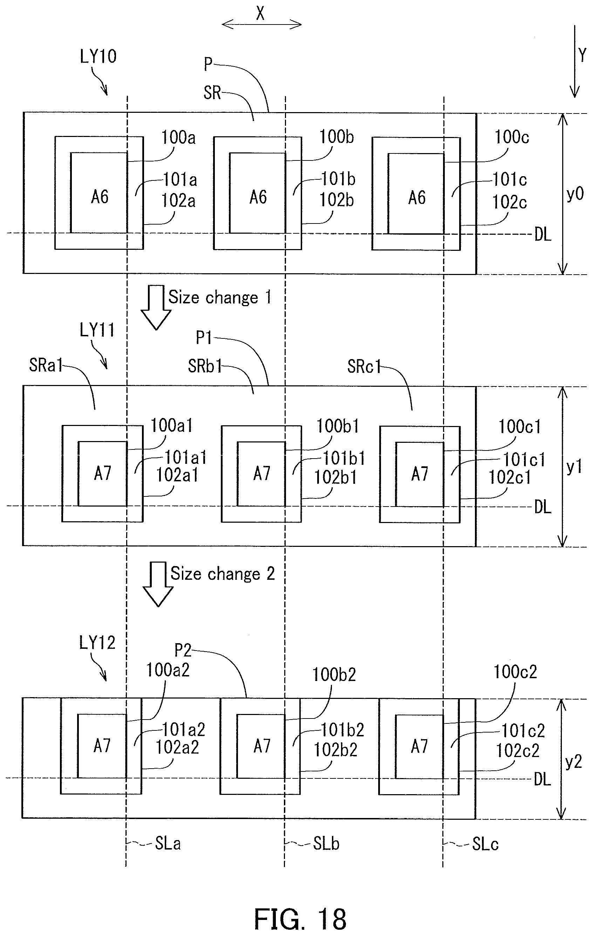

FIG. 18 is a process diagram in the case where the fixed position is set to "right". As shown in FIG. 18, the "size change 1" is executed from a layout LY10 to a layout LY1, so that the size of the page position regions 100a through 100c is changed from A6 to A7. In addition, the page position regions 100a1 through 100c1 of the pages corresponding to the submission data Din are located on the unit printing sheet PI, such that positions of post-size change right sides match right side positions SLa through SLc of the initial page position regions 100a through 100c, and such that the post-size change bottom line DL matches the bottom line DL of the initial page position regions 100a through 100c. The "size change 2" is executed from the layout LY11 to a layout LY12 shown in FIG. 18, so that the longitudinal size of the unit printing sheet P is shortened from the initial longitudinal size y0 to y2.

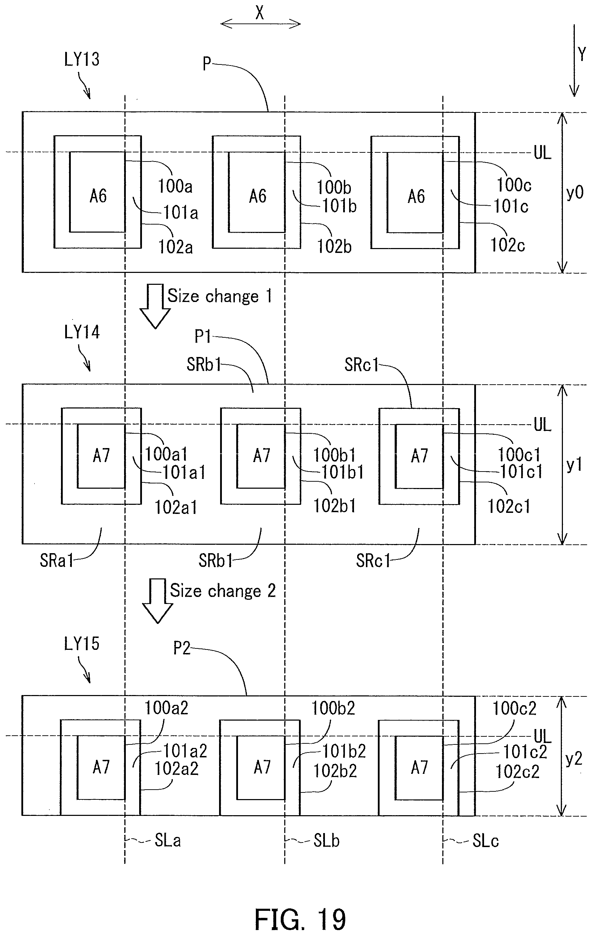

As shown in a layout LY13 and a layout LY14 in FIG. 19, in the "size change 1", the size of the page position regions 100a through 100c may be changed on the basis of a top side UL thereof. As shown in the layout LY14 and a layout LY15 in FIG. 19, in the "size change 2", the size of the unit printing sheet P may be changed in the sheet feeding direction Y such that the margin regions SRal through SRc1 below the bottom sides of the page cell position regions 102a1 through 102c1 are removed.

As can be seen, in the "size change 2", the margin regions SRal through SRc1 on the side opposite to the side used as the basis in the "size change 1" in the sheet feeding direction Y (namely, side opposite to the top side UL) may be removed.

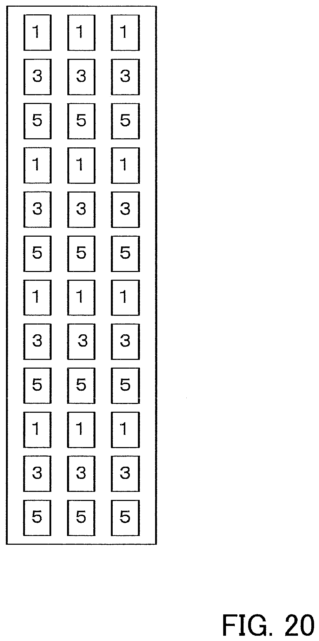

The print job data holding portion 44 holds the print job data Dj generated by the print job data generation portion 43. The overall imposition information generation portion 45 generates overall imposition information Dly representing an imposition layout of all pages to be printed by the printer 20 by execution of the print job. The overall imposition information Dly is generated based on the submission data Din included in the print job data Dj, the information Dc on the number of copies and the flatplan information (information on the position of each of the pages). As schematically shown in FIG. 20, the overall imposition information Dly is information based on which the positions of all the pages on the printing sheet is recognized. FIG. 20 shows an example of a case where the submission data is 6-page data and the number of copies is 12.

The rasterization processing portion 46 executes a rasterization process on the submission data Din included in the print job data Dj based on the overall imposition information Dly generated by the overall imposition information generation portion 45 to generate printing data Dpr, which is data representing the printing target in a bitmap format. The printing data Dpr is transmitted to the printer 20, and the printer 20 performs the print output based on the printing data Dpr. The data format of the printing data Dpr is converted when necessary before the printing data Dpr is transmitted to the printer 20.

In this embodiment, the print job generator 43 realizes the layout acquisition portion, the page position determination portion and the unit printing sheet size reduction portion.

### <1.4 Processing procedure>

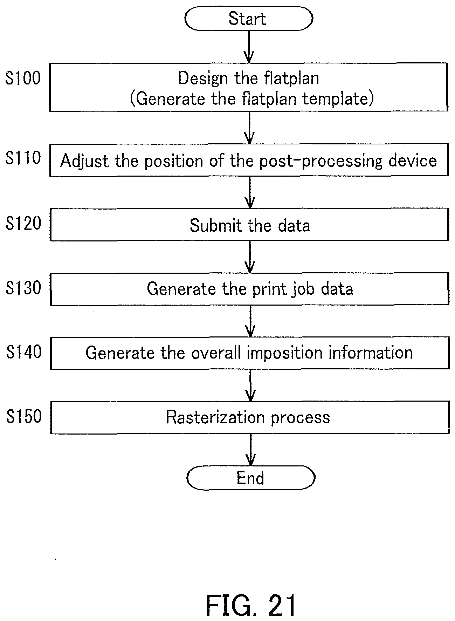

Now, a procedure of the printing data generation process will be described. FIG. 21 is a flowchart showing a procedure of the printing data generation process in this embodiment. The procedure of the printing data generation process shown in the flowchart of FIG. 21 realizes an example of the printing data generation method. In this embodiment, first, the operator designs the flatplan by use of the flatplan designing screen (the basic designing screen 5 and the detailed designing screen 6) (step S100). The process in step S100 does not need to be performed each time the printing data Dpr is to be generated. In the case where the flatplan template Dt corresponding to the page size in the submission data Din is already present, the process in step S100 is not needed.

Next, the position of the first cutter 31 is adjusted based on the submission data Din, which is data on the printing target (step S110). In step S110, print job data for a test is generated by use of the flatplan template Dt corresponding to the submission data Din on the printing target, and the print output is performed based on the print job data for the test. A printing sheet having the data printed thereon, which is the result of the print output, is used to adjust the position of the first cutter 31 (specifically, adjust the position of the blade of the cutter that cuts the printing sheet in the longitudinal direction). A reason why the printing sheet having the data printed thereon is used to adjust the position of the first cutter 31 is that it is necessary to check the actual printing position on the printing sheet and to accurately adjust the position of the blade of the cutter.

Next, data on the printing target is submitted (step S120). In more detail, data on the printing target that is held on, for example, the client computer 7 is supplied to the printing data generation device 10 as the submission data Din. In this step, the information Dc on the number of copies (number of copies on which the submission data Dt is to be printed) is also supplied. The submission data Din is, for example, data in a PDF (Portable Document Format).

Next, the print job data Dj necessary to execute the print job based on the submission data Din is generated (step S130). The print job data Dj is generated based on the submission data Din and the information Dc on the number of copies supplied to the printing data generation device 10 in step S120 and the flatplan template Dt, generated in step S100, corresponding to the submission data Din.

Next, the overall imposition information Dly, which represents the imposition layout of all the pages to be printed by the printer 20, is generated (step S140). The overall imposition information Dly is generated based on the print job data Dj generated in step S130 (in more detail, the submission data Din and the information Dc on the number of copies supplied to the printing data generation device 10 in step S120 and the flatplan template Dt generated in step S100).

Next, the rasterization process (RIP process) is executed on the submission data Din based on the overall imposition information Dly generated in step S140 (step S150). As a result, the printing data Dpr, which represents the printing target in the bitmap format, is generated. Thus, the printing data generation process is finished. The printing data Dpr generated in step S150 is transmitted to the printer 20, and the printer 20 performs the printing.

In this embodiment, step S130 realizes the layout reading step and the page position determination step, step S140 realizes the overall imposition information generation step, and step S150 realizes the rasterization step.

### <1.5 Operation example>

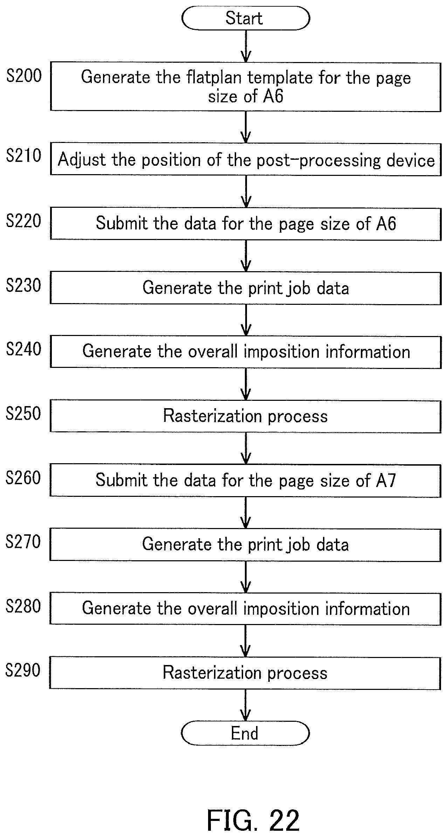

Now, with reference to FIG. 22, a procedure of the printing data generation process in the case where book printing of A6-size booklets and book printing of A7-size booklets are performed on one line in a plant will be described. The procedure shown in the flowchart of FIG. 22 realizes an example of the printing data generation method.

In this example, first, a flatplan is designed by use of the flatplan designing screen (the basic designing screen 5 and the detailed basic designing screen 6) for the page size of A6. As a result, flatplan template Dt for the page size of A6 is generated (step S200).

Next, the flatplan template Dt generated in step S200 is used to generate print job data for a test. The result of the print output performed based on the print job data for the test (printing sheet having the data printed thereon) is used to adjust the position of the first cutter 31 (step S210).

Next, data is submitted to print the A6-size booklets (step S220). Then, print job data is generated (S230), overall imposition information Dly is generated (step S240), and the rasterization process is executed (step S250) like in steps S130 through S150 described above.

Next, data is submitted to print the A7-size booklets (step S260). Then, print job data is generated (S270), overall imposition information Dly is generated (step S280), and the rasterization process is executed (step S290) like in steps S130 through S150 described above.

Printing data Dpr generated by the above-described process is transmitted to the printer 20, and the printer 20 performs the print output based on the printing data Dpr. The printed items obtained as a result of the print output are as schematically shown in FIG. 3. As shown in FIG. 3, in the left column, the position of the left ends of the page regions PR in the page cells C1 (first printing region R1) and the position of the left ends of the page regions PR in the page cells C2 (second printing region R2) match each other, namely, are both on the longitudinal cutting line L1 extending in the sheet feeding direction Y. In the central column, the position of the left ends of the page regions PR in the page cells C1 (first printing region R1) and the position of the left ends of the page regions PR in the page cells C2 (second printing region R2) match each other, namely, are both on the longitudinal cutting line L2 extending in the sheet feeding direction Y. In the right column, similarly, the position of the left ends of the page regions PR in the page cells C1 and the position of the left ends of the page regions PR in the page cells C2 match each other, namely, are both on the longitudinal cutting line L3 extending in the sheet feeding direction Y.

Therefore, when the printing sheet is to be cut (in the sheet feeding direction Y) by the first cutter 31 in order to produce the booklets (see step S4 in FIG. 2), the position of the first cutter 31 does not need to be re-adjusted between the process to produce the A6-size booklets and the process to produce the A7-size booklets. Namely, in the case where a printed item including pages of different page sizes from each other is to be cut in the sheet feeding direction Y, the work of adjusting the first cutter 31 is not necessary.

### <1.6 Effects>

According to this embodiment, in the case where the page size (lateral size) in the submission data Din is smaller than the page size (lateral size) designated by the flatplan template Dt, the actual position of each page on the unit printing sheet P when the printing is performed is defined in a region obtained by the size of each page in the layout defined by the flatplan template Dt being reduced in accordance with the page size in the submission data Din while one end or the other end, in the sheet width direction X, of each page in the layout is fixed. Namely, as long as the same flatplan template Dt is used, one end of each actual page on the unit printing sheet P is located at one same position regardless of the page size in the submission data Din. Therefore, as long as the same flatplan template Dt is used, the position of the longitudinal cutting line of the post-printing unit printing sheet P is a certain fixed position. For this reason, the printing data Dpr for the printing of a plurality of booklets of different page sizes is generated based on one flatplan template Dt, so that the work of cutting the sheet in the sheet feeding direction Y to produce a plurality of booklets may be performed with no need to re-adjust the first cutter 31 during the work. Since one flatplan template Dt is sufficient for a plurality of page sizes, the management cost is decreased. As described above, this embodiment realizes the printing data generation device 10 that generates printing data Dpr allowing a plurality of booklets of different page sizes to be printed by one printer 20 with no need to re-adjust the first cutter 31 and is operable at low cost..

In the case where the page size (longitudinal size) in the submission data Din is smaller than the page size (longitudinal size) designated by the flatplan template Dt, the longitudinal size of the unit printing sheet P is shortened by the margin cut process, and the interval, in the sheet feeding direction Y, between the pages printed on the printing sheet is shortened. In this manner, provision of a large margin on the printing sheet is prevented. As a result, the amount of the sheet to be wasted is decreased. Namely, since the margin region on the unit printing sheet P is decreased, the amount of the sheet to be wasted is decreased.

### <1.7 Modifications>

In embodiment 1 described above, the region above the pages (region passing the printing portion 25 after the printing is performed on the pages) is cut off by the margin cut process while only the bleed region is left. The present disclosure is not limited to this. Two modifications on the margin cut process will be described below. In these two modifications also, the margin region on the unit printing sheet P is decreased. Therefore, the amount of the sheet to be wasted is decreased.

### <1.7.1 Modification 1>

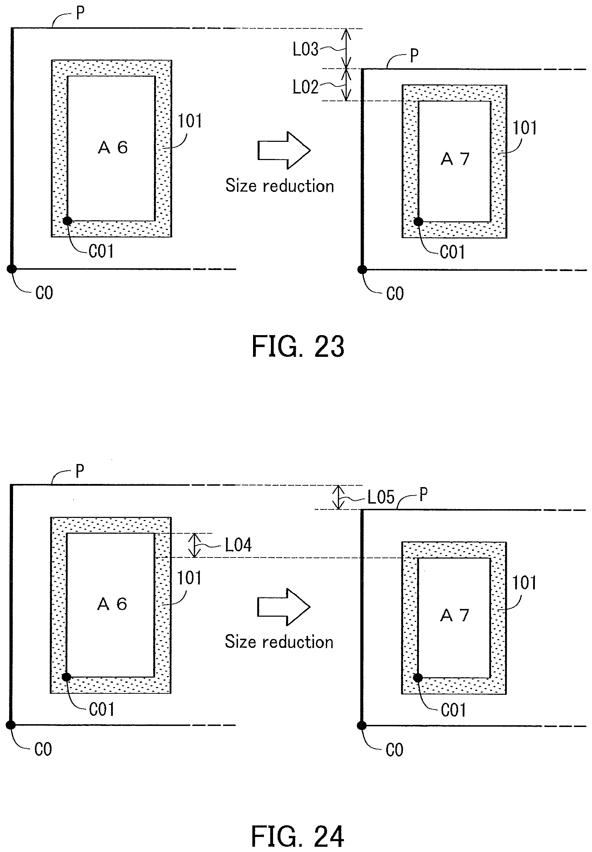

In this modification, the region above the pages is cut off by the margin cut process while a region of a certain length (length indicated by arrow L02 in FIG. 23) is left in the sheet feeding direction Y, regardless of the size of the region designated as the bleed region. Namely, the height of the unit printing sheet P is shortened by a length indicated by arrow L03 in FIG. 23.

### <1.7.2 Modification 2>

In this modification, the region above the pages is cut off by the margin cut process such that the height of the unit printing sheet P is shortened by a length corresponding to difference L04 between the longitudinal size of the page size designated by the flatplan template Dt and the longitudinal size in the submission data Din, regardless of the size of the region designated as the bleed region. Namely, the height of the unit printing sheet P is shortened by a length indicated by arrow L05 in FIG. 24.

### <2. Embodiment 2>

Embodiment 2 of the present disclosure which is not part of the claimed invention, and is present for illustration purposes only, will be described. In this embodiment, the flatplan template Dt is not used, unlike in embodiment 1. The overall structure of the printing system and the hardware configuration of the printing data generation device 100 are substantially the same as those in embodiment 1 and will not be described.

### <2.1 Functional structure of the printing data generation device>

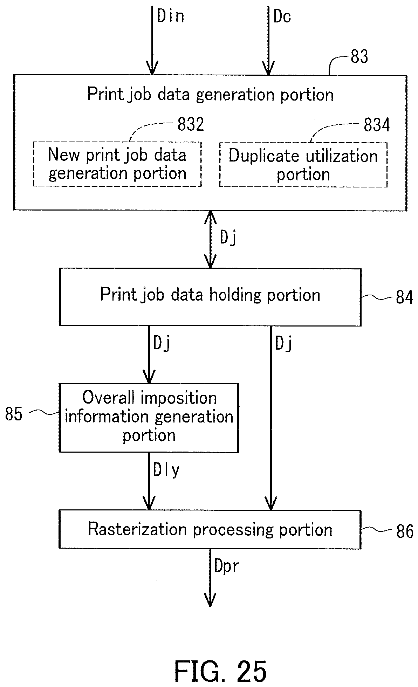

FIG. 25 is a block diagram showing a functional structure of the printing data generation device 10 in this embodiment. As shown in FIG. 25, the printing data generation device 10 functionally includes a print job data generation portion 83, a print job data holding portion 84, an overall imposition information generation portion 85, and a rasterization processing portion 86. The print job data generation portion 83 includes a new print job data generation portion 832 and a duplicate utilization portion 834.

The print job data holding portion 84, the overall imposition information generation portion 85 and the rasterization processing portion 86 respectively perform substantially the same operations as those of the print job data holding portion 44, the overall imposition information generation portion 45 and the rasterization processing portion 46 in embodiment 1.

The new print job data generation portion 832 in the print job data generation portion 83 newly generates print job data Dj. In more detail, the new print job data generation portion 832 displays, on the display portion 14, substantially the same screen as, for example, the flatplan designing screen in embodiment 1, and accepts an operation of flatplan designing by the operator. Based on the contents of the operation, the submission data Din, and the information Dc on the number of copies, the new print job data generation portion 832 generates the print job data Dj substantially the same as that in embodiment 1. In this embodiment, the contents of the flatplan designing are not held as the template.

The duplicate utilization portion 834 in the print job data generation portion 83 creates a duplicate of the print jog data Dj held by the print job data holding portion 84, and generates print job data Dj for new submission data Din on a new printing target, instead of the existing submission data Din. In this step, in the case where the page size in the submission data Din used to form the duplicate and the page size in the new submission data Din are different from each other, the actual position of each of the pages on the unit printing sheet P when the printing is performed by the printer 20 is determined and the margin region of the unit printing sheet P is cut off by the margin cut process, in substantially the same manner as in embodiment 1. As can be seen, in this embodiment, the operator is allowed to create the new print job data Dj for the new submission data Din on the new printing target, based on the existing print job data Dj, while various settings are maintained.

### <2.2 Operation example>

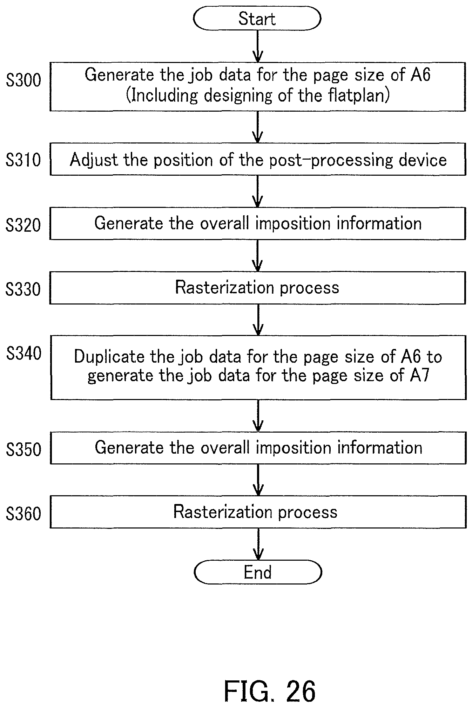

Now, with reference to FIG. 26, a procedure of the printing data generation process in the case where book printing of A6-size booklets and book printing of A7-size booklets are performed on one line in a plant will be described. The procedure shown in the flowchart of FIG. 26 realizes an example of the printing data generation method.

In this example, first, a flatplan is designed for the page size of A6. Based on the contents of the design, the submission data Din and the information Dc on the number of copies, the print job data Dj is generated (step S300).

Next, the print job data Dj generated in step S300 is used to generate print job data for a test. The result of the print output performed based on the print job data for the test (printing sheet having the data printed thereon) is used to adjust the position of the first cutter 31 (step S310). Then, overall imposition information Dly is generated (step S320) and the rasterization process is executed (step S330) like in steps S140 and S150 (see FIG. 20) in embodiment 1.

Next, print job data Dj generated in step S300 is duplicated, and print job data Dj for the new submission data Din on a new printing target, more specifically, on the page size of A7, is generated (step S340). Then, overall imposition information Dly is generated (step S350) and the rasterization process is executed (step S360) like in steps S140 and S150 in embodiment 1.

The printing data Dpr generated by the above-described process is transmitted to the printer 20, and the printer 20 performs the print output based on the printing data Dpr. The printed items obtained as a result of the print output are as schematically shown in FIG. 27 like in embodiment 1. Specifically, a plurality of pages are printed on the continuous printed item 230. One book is produced from four pages P11 through P14 included in the region enclosed by the dashed line indicated by the reference sign 90. Therefore, when the printing sheet is to be cut (in the sheet feeding direction Y) by the first cutter 31 in order to produce the books (step S4 in FIG. 2), the cutter 31 does not need to be re-adjusted between the process for the A6-size booklets and the process for the A7-size booklets.

The work of producing the books does not need to be performed by the above-described procedure (procedure shown in FIG. 2). In FIG. 2, the procedure is performed in the order of the cutting of the continuous printed item 230 in the longitudinal direction (step S4 in FIG. 2), the cutting in the lateral direction (step S5 in FIG. 2) and the cutting-off of the unnecessary region (step S6 in FIG. 2). Alternatively, the procedure may be performed, for example, in the following order: the continuous printed item 230 is cut in the longitudinal direction by the first cutter 31 (step S4 in FIG. 2), each of the resultant continuous printed items 230 is cut in the lateral direction along a top side and a bottom side of the region enclosed by the dashed line indicated by the reference sign 90 (see FIG. 27), the four pages P11 through P14 are folded in the sheet feeding direction Y by the folder 35, and the unnecessary regions including the bleed regions BR and the margin regions SR (see FIG. 6) are cut off by the cutter 33.

In the above-described embodiments, the printed items of different page sizes are continuously formed on the continuous sheet 22. The present disclosure is applicable to a form in which the printed items of the same page size are formed on the continuous sheet 22.

### <2.3 Effects>

According to this embodiment, the same effects as those in embodiment 1 are provided even in the case where the flatplan template Dt is not used to generate the print job data Dj.

Embodiments and modifications of the present disclosure are described above with reference to the drawings. The present disclosure is not limited to any of the embodiments and modifications described above, and may be carried out in any of various forms covered by the scope of protection which is defined by the claims.

The drawings mainly show the elements schematically in order to make the disclosure easier to understand. The thickness, length, number, interval and the like of each of the elements shown in the drawings may be different from the actual thickness, length, number, interval and the like for the reason related to the drafting of the drawings. The structure of the elements described in the embodiments is merely an example and is not limiting, and may be modified in any of various manners covered by the scope of protection which is defined by the claims.

## Claims

1. A printing data generation device (10) generating printing data, to be supplied to a printer (20) that performs printing on a printing sheet, based on submission data, the printing data generation device (10) comprising:
a layout acquisition portion (43) configured to acquire a layout including a page position region of each of pages in a second direction (X) perpendicular to a first direction (Y), which is a printing sheet feeding direction, the page position region being on a unit printing sheet, which is a one-unit printing region;
a page position determination portion (43) configured to determine an actual position of each of the pages on the unit printing sheet when the printing is performed by the printer, the actual position being determined based on the page position region of each of the pages and the submission data;
an overall imposition information generation portion (45) configured to generate overall imposition information that specifies an imposition layout of all pages to be printed by the printer, the overall imposition information being generated based on the actual position of each of the pages determined by the page position determination portion and the submission data; and
a rasterization processing portion (46) configured to execute a rasterization process on the submission data based on the overall imposition information to generate the printing data;
wherein the page position determination portion (43) changes a size of the page position region in accordance with a second direction length of each of the pages included in the submission data while fixing one end or the other end, in the second direction, of the page position region as a fixed end, and determines the actual position of each of the pages on the unit printing sheet, and
wherein regarding each of the pages on the unit printing sheet, the same end of the one end or the other end, in the second direction, of the page position region is regarded as the fixed end.

2. The printing data generation device (10) according to claim 1, wherein:
the page position region has a maximum page size allowed to be allocated as a one-page region on the unit printing sheet based on a second direction length of the unit printing sheet and the number of the pages allocated to the unit printing sheet; and
the page position determination portion (43) reduces the size of the page position region in accordance with the second direction length of each of the pages included in the submission data, and determines the actual position of each of the pages on the unit printing sheet.

3. The printing data generation device (10) according to claim 1 or 2, wherein:
a bleed region is provided around the page position region, the bleed region being provided around four sides of each of the pages when the printing is performed by the printer; and
where a region in the unit printing sheet that is outer to one end, in the first direction, of each of the pages is defined as a first margin region, the printing data generation device further comprises a unit printing sheet size reduction portion (43) configured to remove the entirety of, or a part of, a region of the first margin region other than the bleed region and shorten a first direction length of the unit printing sheet.

4. The printing data generation device (10) according to claim 1 or 2, wherein:
a bleed region is provided around the page position region, the bleed region being provided around four sides of each of the pages when the printing is performed by the printer; and
where a region in the unit printing sheet that is outer to one end, in the first direction, of each of the pages is defined as a first margin region, the printing data generation device further comprises a unit printing sheet size reduction portion (43) configured to shorten a first direction length of the unit printing sheet by a length corresponding to a difference between a first direction length of each of the pages held by the layout acquisition portion and a first direction length of each of the pages included in the submission data.

5. The printing data generation device (10) according to any one of claims 1 through 4, wherein:
the submission data is to continuously print first job data for printing of a page of a first page size and second job data for printing of a page of a second page size, different from the first page size, on the printing sheet by the printer; and
the page position determination portion (43) changes a size of the page position region in accordance with a second direction length of the first page size while fixing one end or the other end, in the second direction, of the page position region as a fixed end, and determines the actual position of each of the pages included in the first job data on the unit printing sheet; and changes a size of the page position region in accordance with a second direction length of the second page size while fixing an end of the page position region on the same side as the fixed end, and determines the actual position of each of the pages included in the second job data on the unit printing sheet.

6. The printing data generation device (10) according to any one of claims 1 through 5, further comprising a template holding portion configured to hold the layout as a template,
wherein the page position determination portion (43) determines the actual position of each of the pages on the unit printing sheet when the printing is performed by the printer, based on a template corresponding to the submission data among templates held by the template holding portion and the submission data.

7. A printing data generation method for generating printing data, to be supplied to a printer (20) that performs printing on a printing sheet, based on submission data, the printing data generation method comprising:
a layout reading step (S130) of reading a layout including a page position region of each of pages in a second direction perpendicular to a first direction, which is a printing sheet feeding direction, the page position region being on a unit printing sheet, which is a one-unit printing region;
a page position determination step (S130) of determining an actual position of each of the pages on the unit printing sheet when the printing is performed by the printer, the actual position being determined based on the layout read in the layout reading step and the submission data;
an overall imposition information generation step (S140) of generating overall imposition information that specifies an imposition layout of all pages to be printed by the printer, the overall imposition information being generated based on the actual position of each of the pages determined in the page position determination step and the submission data; and
a rasterization step (S150) of executing a rasterization process on the submission data based on the overall imposition information to generate the printing data,
wherein in the page position determination step (S130), a size of the page position region is changed in accordance with a second direction length of each of the pages included in the submission data while one end or the other end, in the second direction, of the page position region is fixed as a fixed end, and the actual position of each of the pages on the unit printing sheet is determined, and
wherein regarding each of the pages on the unit printing sheet, the same end of the one end or the other end, in the second direction, of the page position region is regarded as the fixed end.

8. A non-transitory computer-readable storage medium (17) having, stored thereon, a printing data generation program (18) generating printing data, to be supplied to a printer (20) that performs printing on a printing sheet, based on submission data, the printing data generation program (18) comprising instructions which, when executed by a CPU of a computer, cause the CPU of the computer to execute, by use of a memory:
a layout reading step (S130) of reading a layout including a page position region of each of pages in a second direction perpendicular to a first direction, which is a printing sheet feeding direction, the page position region being on a unit printing sheet, which is a one-unit printing region;
a page position determination step (S130) of determining an actual position of each of the pages on the unit printing sheet when the printing is performed by the printer, the actual position being determined based on the layout read in the layout reading step and the submission data;
an overall imposition information generation step (S140) of generating overall imposition information that specifies an imposition layout of all pages to be printed by the printer, the overall imposition information being generated based on the actual position of each of the pages determined in the page position determination step and the submission data; and
a rasterization step (S150) of executing a rasterization process on the submission data based on the overall imposition information to generate the printing data,
wherein in the page position determination step (S130), a size of the page position region is changed in accordance with a second direction length of each of the pages included in the submission data while one end or the other end, in the second direction, of the page position region is fixed as a fixed end, and the actual position of each of the pages on the unit printing sheet is determined, and
wherein regarding each of the pages on the unit printing sheet, the same end of the one end or the other end, in the second direction, of the page position region is regarded as the fixed end.

9. A printing data generation program (18) generating printing data, to be supplied to a printer (20) that performs printing on a printing sheet, based on submission data, the printing data generation program (18) comprising instructions which, when executed by a CPU of a computer, cause the CPU of the computer to execute, by use of a memory:
a layout reading step (S130) of reading a layout including a page position region of each of pages in a second direction perpendicular to a first direction, which is a printing sheet feeding direction, the page position region being on a unit printing sheet, which is a one-unit printing region;
a page position determination step (S130) of determining an actual position of each of the pages on the unit printing sheet when the printing is performed by the printer, the actual position being determined based on the layout read in the layout reading step and the submission data;
an overall imposition information generation step (S140) of generating overall imposition information that specifies an imposition layout of all pages to be printed by the printer, the overall imposition information being generated based on the actual position of each of the pages determined in the page position determination step and the submission data; and
a rasterization step (S150) of executing a rasterization process on the submission data based on the overall imposition information to generate the printing data,
wherein in the page position determination step (S130), a size of the page position region is changed in accordance with a second direction length of each of the pages included in the submission data while one end or the other end, in the second direction, of the page position region is fixed as a fixed end, and the actual position of each of the pages on the unit printing sheet is determined, and
wherein regarding each of the pages on the unit printing sheet, the same end of the one end or the other end, in the second direction, of the page position region is regarded as the fixed end.

## Patentansprüche

1. Druckdatenerzeugungsvorrichtung (10), die Druckdaten erzeugt, die einem Drucker (20) zuzuführen sind, der einen Druck auf einem Druckblatt durchführt, basierend auf Übermittlungsdaten, wobei die Druckdatenerzeugungsvorrichtung (10) umfasst:
einen Layouterfassungsabschnitt (43), der so konfiguriert ist, dass er ein Layout erfasst, das einen Seitenpositionsbereich jeder der Seiten in einer zweiten Richtung (X) senkrecht zu einer ersten Richtung (Y) enthält, die eine Druckblattzuführungsrichtung ist, wobei sich der Seitenpositionsbereich auf einem Einheitsdruckblatt befindet, das ein Einheitsdruckbereich ist;
einen Seitenpositionsbestimmungsabschnitt (43), der konfiguriert ist, um eine tatsächliche Position jeder der Seiten auf dem Einheitsdruckblatt zu bestimmen, wenn das Drucken durch den Drucker durchgeführt wird, wobei die tatsächliche Position auf der Basis des Seitenpositionsbereichs jeder der Seiten und der Übermittlungsdaten bestimmt wird;
einen Gesamtausschießinformationserzeugungsabschnitt (45), der so konfiguriert ist, dass er Gesamtausschießinformation erzeugt, die ein Ausschießlayout aller durch den Drucker zu druckenden Seiten spezifiziert, wobei die Gesamtausschießinformation auf der Basis der tatsächlichen Position jeder der Seiten, die durch den Seitenpositionsbestimmungsabschnitt bestimmt wird, und der Übermittlungsdaten erzeugt wird; und
einen Rasterisierungsverarbeitungsabschnitt (46), der so konfiguriert ist, dass er einen Rasterisierungsprozess an den Übermittlungsdaten auf der Basis der Gesamtausschießinformation ausführt, um die Druckdaten zu erzeugen;
wobei der Seitenpositionsbestimmungsabschnitt (43) eine Größe des Seitenpositionsbereichs in Übereinstimmung mit einer Länge in einer zweiten Richtung jeder der Seiten, die in den Übermittlungsdaten enthalten sind, ändert, während er ein Ende oder das andere Ende, in der zweiten Richtung, des Seitenpositionsbereichs als ein festes Ende fixiert, und die tatsächliche Position jeder der Seiten auf dem Einheitsdruckblatt bestimmt, und
wobei bezüglich jeder der Seiten auf dem Einheitsdruckblatt das gleiche Ende des einen Endes oder des anderen Endes, in der zweiten Richtung, des Seitenpositionsbereichs als das feste Ende betrachtet wird.

2. Die Druckdatenerzeugungsvorrichtung (10) nach Anspruch 1, wobei
der Seitenpositionsbereich eine maximale Seitengröße hat, die als ein Ein-SeitenBereich auf dem Einheitsdruckblatt zugewiesen werden darf, basierend auf einer Länge des Einheitsdruckblattes in der zweiten Richtung und der Anzahl der Seiten, die dem Einheitsdruckblatt zugewiesen sind; und
der Seitenpositionsbestimmungsabschnitt (43) die Größe des Seitenpositionsbereichs in Übereinstimmung mit der Länge in der zweiten Richtung jeder der Seiten, die in den Übermittlungsdaten enthalten sind, reduziert und die tatsächliche Position jeder der Seiten auf dem Einheitsdruckblatt bestimmt.

3. Die Druckdatenerzeugungsvorrichtung (10) nach Anspruch 1 oder 2, wobei:
ein Beschnittbereich um den Seitenpositionsbereich herum vorgesehen ist, wobei der Beschnittbereich um vier Seiten jeder der Seiten herum vorgesehen ist, wenn das Drucken durch den Drucker durchgeführt wird; und
wobei ein Bereich in dem Einheitsdruckblatt, der sich in der ersten Richtung außerhalb eines Endes jeder der Seiten befindet, als ein erster Randbereich definiert ist, wobei die Druckdatenerzeugungsvorrichtung ferner einen Einheitsdruckblattgrößenverringerungsabschnitt (43) umfasst, der so konfiguriert ist, dass er die Gesamtheit oder einen Teil eines Bereichs des ersten Randbereichs außer dem Beschnittbereich entfernt und eine Länge des Einheitsdruckblatts in der ersten Richtung verkürzt.

4. Die Druckdatenerzeugungsvorrichtung (10) nach Anspruch 1 oder 2, wobei
ein Beschnittbereich um den Seitenpositionsbereich herum vorgesehen ist, wobei der Beschnittbereich um vier Seiten jeder der Seiten herum vorgesehen ist, wenn das Drucken durch den Drucker durchgeführt wird; und
wobei ein Bereich in dem Einheitsdruckblatt, der sich außerhalb eines Endes in der ersten Richtung jeder der Seiten befindet, als ein erster Randbereich definiert ist, die Druckdatenerzeugungsvorrichtung ferner einen Einheitsdruckblattgrößenverringerungsabschnitt (43) umfasst, der so konfiguriert ist, dass er eine Länge des Einheitsdruckblatts in der ersten Richtung um eine Länge verkürzt, die einer Differenz zwischen einer Länge jeder der Seiten in der ersten Richtung, die durch den Layouterfassungsabschnitt gehalten wird, und einer Länge jeder der Seiten in der ersten Richtung, die in den Übermittlungsdaten enthalten ist, entspricht.

5. Druckdatenerzeugungsvorrichtung (10) nach einem der Ansprüche 1 bis 4, wobei:
die Übermittlungsdaten dazu dienen, kontinuierlich erste Auftragsdaten zum Drucken einer Seite einer ersten Seitengröße und zweite Auftragsdaten zum Drucken einer Seite einer zweiten Seitengröße, die sich von der ersten Seitengröße unterscheidet, durch den Drucker auf das Druckblatt zu drucken; und
der Seitenpositionsbestimmungsabschnitt (43) eine Größe des Seitenpositionsbereichs in Übereinstimmung mit einer Länge in einer zweiten Richtung der ersten Seitengröße ändert, während er das eine Ende oder das andere Ende, in der zweiten Richtung, des Seitenpositionsbereichs als ein festes Ende fixiert, und die tatsächliche Position jeder der Seiten, die in den ersten Auftragsdaten enthalten sind, auf dem Einheitsdruckblatt bestimmt und eine Größe des Seitenpositionsbereichs in Übereinstimmung mit einer Länge in der zweiten Richtung der zweiten Seitengröße ändert, während ein Ende des Seitenpositionsbereichs auf der gleichen Seite wie das feste Ende fixiert wird, und die tatsächliche Position jeder der Seiten bestimmt, die in den zweiten Auftragsdaten auf dem Einheitsdruckblatt enthalten sind.

6. Die Druckdatenerzeugungsvorrichtung (10) nach einem der Ansprüche 1 bis 5, die ferner einen Schablonenhalteabschnitt umfasst, der so konfiguriert ist, dass er das Layout als Schablone hält,
wobei der Seitenpositionsbestimmungsabschnitt (43) die tatsächliche Position jeder der Seiten auf dem Einheitsdruckblatt bestimmt, wenn das Drucken durch den Drucker durchgeführt wird, basierend auf einer Schablone, die den Übermittlungsdaten entspricht, unter Schablonen, die durch den Schablonenhalteabschnitt gehalten werden, und den Übermittlungsdaten.

7. Druckdatenerzeugungsverfahren zum Erzeugen von Druckdaten, die einem Drucker (20) zuzuführen sind, der das Drucken auf einem Druckblatt durchführt, auf der Basis von Übermittlungsdaten, wobei das Druckdatenerzeugungsverfahren umfasst:
einen Layoutleseschritt (S130) des Lesens eines Layouts, das einen Seitenpositionsbereich jeder der Seiten in einer zweiten Richtung senkrecht zu einer ersten Richtung enthält, die eine Druckblattvorschubrichtung ist, wobei sich der Seitenpositionsbereich auf einem Einheitsdruckblatt befindet, das ein Einheitsdruckbereich ist;
einen Seitenpositionsbestimmungsschritt (S130) des Bestimmens einer tatsächlichen Position jeder der Seiten auf dem Einheitsdruckblatt, wenn das Drucken durch den Drucker durchgeführt wird, wobei die tatsächliche Position auf der Basis des in dem Layoutleseschritt gelesenen Layouts und der Übermittlungsdaten bestimmt wird;
einen Gesamtausschießinformationserzeugungsschritt (S140) zum Erzeugen von Gesamtausschießinformation, die ein Ausschießlayout aller durch den Drucker zu druckenden Seiten spezifiziert, wobei die Gesamtausschießinformation auf der Basis der tatsächlichen Position jeder der Seiten, die in dem Seitenpositionsbestimmungsschritt bestimmt wird, und der Übermittlungsdaten erzeugt wird; und
einen Rasterisierungsschritt (S150) des Ausführens eines Rasterisierungsprozesses an den Übermittlungsdaten auf der Basis der Gesamtausschießinformation, um die Druckdaten zu erzeugen,
wobei in dem Seitenpositionsbestimmungsschritt (S130) eine Größe des Seitenpositionsbereichs in Übereinstimmung mit einer Länge in einer zweiten Richtung jeder der Seiten, die in den Übermittlungsdaten enthalten sind, geändert wird, während ein Ende oder das andere Ende in der zweiten Richtung des Seitenpositionsbereichs als ein festes Ende festgelegt ist, und die tatsächliche Position jeder der Seiten auf dem Einheitsdruckblatt bestimmt wird, und
wobei bezüglich jeder der Seiten auf dem Einheitsdruckblatt das gleiche Ende des einen Endes oder des anderen Endes in der zweiten Richtung des Seitenpositionsbereichs als das feste Ende betrachtet wird.

8. Nicht-flüchtiges computerlesbares Speichermedium (17), auf dem ein Druckdatenerzeugungsprogramm (18) gespeichert ist, das Druckdaten erzeugt, die einem Drucker (20) zugeführt werden sollen, der das Drucken auf einem Druckblatt durchführt, basierend auf Übermittlungsdaten, wobei das Druckdatenerzeugungsprogramm (18) eine CPU eines Computers veranlasst, unter Verwendung eines Speichers auszuführen:
einen Layoutleseschritt (S130) des Lesens eines Layouts, das einen Seitenpositionsbereich jeder der Seiten in einer zweiten Richtung senkrecht zu einer ersten Richtung enthält, die eine Druckblattzuführungsrichtung ist, wobei sich der Seitenpositionsbereich auf einem Einheitsdruckblatt befindet, das ein Einheitsdruckbereich ist;
einen Seitenpositionsbestimmungsschritt (S130) des Bestimmens einer tatsächlichen Position jeder der Seiten auf dem Einheitsdruckblatt, wenn das Drucken durch den Drucker durchgeführt wird, wobei die tatsächliche Position auf der Basis des in dem Layoutleseschritt gelesenen Layouts und der Übermittlungsdaten bestimmt wird;
einen Gesamtausschießinformationserzeugungsschritt (S140) zum Erzeugen von Gesamtausschießinformation, die ein Ausschießlayout aller durch den Drucker zu druckenden Seiten spezifiziert, wobei die Gesamtausschießinformation auf der Basis der tatsächlichen Position jeder der Seiten, die in dem Seitenpositionsbestimmungsschritt bestimmt wird, und der Übermittlungsdaten erzeugt wird; und
einen Rasterisierungsschritt (S150) des Ausführens eines Rasterisierungsprozesses an den Übermittlungsdaten auf der Basis der Gesamtausschießinformation, um die Druckdaten zu erzeugen,
wobei in dem Seitenpositionsbestimmungsschritt (S130) eine Größe des Seitenpositionsbereichs in Übereinstimmung mit einer Länge in einer zweiten Richtung jeder der Seiten, die in den Übermittlungsdaten enthalten sind, geändert wird, während ein Ende oder das andere Ende, in der zweiten Richtung, des Seitenpositionsbereichs als ein festes Ende festgelegt wird, und die tatsächliche Position jeder der Seiten auf dem Einheitsdruckblatt bestimmt wird, und
wobei bezüglich jeder der Seiten auf dem Einheitsdruckblatt das gleiche Ende des einen Endes oder des anderen Endes in der zweiten Richtung des Seitenpositionsbereichs als das feste Ende betrachtet wird.

9. Ein Druckdatenerzeugungsprogramm (18), das Druckdaten erzeugt, die einem Drucker (20) zugeführt werden sollen, der einen Druck auf einem Druckblatt durchführt, basierend auf Übermittlungsdaten, wobei das Druckdatenerzeugungsprogramm (18) eine CPU eines Computers veranlasst, unter Verwendung eines Speichers:
einen Layout-Leseschritt (S130) des Lesens eines Layouts, das einen Seitenpositionsbereich jeder der Seiten in einer zweiten Richtung senkrecht zu einer ersten Richtung enthält, die eine Druckblattzuführungsrichtung ist, wobei sich der Seitenpositionsbereich auf einem Einheitsdruckblatt befindet, das ein Einheitsdruckbereich ist;
einen Seitenpositionsbestimmungsschritt (S130) des Bestimmens einer tatsächlichen Position jeder der Seiten auf dem Einheitsdruckblatt, wenn das Drucken durch den Drucker durchgeführt wird, wobei die tatsächliche Position auf der Basis des in dem Layoutleseschritt gelesenen Layouts und der Übermittlungsdaten bestimmt wird;
einen Gesamtausschießinformationserzeugungsschritt (S140) zum Erzeugen von Gesamtausschießinformation, die ein Ausschießlayout aller durch den Drucker zu druckenden Seiten spezifiziert, wobei die Gesamtausschießinformation auf der Basis der tatsächlichen Position jeder der Seiten, die in dem Seitenpositionsbestimmungsschritt bestimmt wird, und der Übermittlungsdaten erzeugt werden; und
einen Rasterisierungsschritt (S150) des Ausführens eines Rasterisierungsprozesses an den Übermittlungsdaten auf der Basis der Gesamtausschießinformation, um die Druckdaten zu erzeugen,
wobei in dem Seitenpositionsbestimmungsschritt (S130) eine Größe des Seitenpositionsbereichs in Übereinstimmung mit einer Länge in einer zweiten Richtung jeder der Seiten, die in den Übermittlungsdaten enthalten sind, geändert wird, während ein Ende oder das andere Ende in der zweiten Richtung des Seitenpositionsbereichs als ein festes Ende festgelegt ist, und die tatsächliche Position jeder der Seiten auf dem Einheitsdruckblatt bestimmt wird, und
wobei bezüglich jeder der Seiten auf dem Einheitsdruckblatt das gleiche Ende des einen Endes oder des anderen Endes in der zweiten Richtung des Seitenpositionsbereichs als das feste Ende betrachtet wird.

## Revendications

1. Un dispositif de production de données d'impression (10) qui produit des données d'impression en vue de les fournir à une imprimante (20) qui imprime sur une fiche d'impression en se basant sur la soumission de données, et ce dispositif de production de données d'impression (10) se compose des éléments suivants :
une portion d'acquisition de mise en page (43) qui est configurée pour acquérir une mise en page, y compris une zone de position de pages pour chacune des pages dans un deuxième sens (X) perpendiculaire à un premier sens (Y), qui correspond au sens d'avance de la fiche d'impression, et cette zone de position de pages se situe sur une fiche d'impression à l'unité, qui est une zone d'impression à l'unité
une portion de détermination de position de pages (43) configurée pour déterminer une position réelle pour chacune des pages de la fiche d'impression à l'unité lorsque l'imprimante imprime, et la position réelle ainsi déterminée se base sur la zone de position de pages de chacune des pages, et sur les données de soumission
une portion de production d'informations sur l'imposition globale (45) qui est configuré pour produire des informations sur l'imposition globale qui spécifient une mise en plage d'imposition pour toutes les pages que doit imprimer l'imprimante, et ces informations sur l'imposition globale sont produites en se basant sur la position réelle de chacune des pages déterminées par la portion de détermination de la position des pages et sur les données de soumission, et
une portion de traitement de matricialisation (46) qui est configurée pour exécuter un processus de matricialisation sur les données de soumission, en se basant sur les information sur l'imposition globale afin de produire les données d'impression
et la portion de détermination de position de pages (43) change une taille de la zone de position de pages en fonction d'une longueur dans un deuxième sens de chacune des pages incluses dans les données de soumission, tout en fixant une extrémité ou l'autre extrémité, dans le deuxième sens, de la zone de position de pages en tant qu'extrémité fixe et détermine la position réelle de chacune des pages sur la fiche d'impression à l'unité, et
en ce qui concerne chacune des pages sur la fiche d'impression à l'unité, la même extrémité d'une extrémité ou de l'autre extrémité, dans le deuxième sens, de la zone de position des pages, est considérée comme constituant l'extrémité fixe.

2. Le dispositif de production de données d'impression (10) que décrit la revendication 1, si ce n'est que :
la zone de position de pages a une taille maximale autorisée de page qui sera attribuée en tant que zone pour une page sur la fiche d'impression à l'unité, en se basant sur une longueur dans le deuxième sens de la fiche d'impression à l'unité, et le nombre de pages attribuées à la fiche d'impression à l'unité, et
la portion de détermination de position de pages (43) réduit la taille de la zone de position de pages en conformité avec la longueur du deuxième sens de chacune des pages incluses dans les données de soumission et détermine la position réelle de chacune des pages sur la fiche d'impression à l'unité.

3. Le dispositif de production de données d'impression (10) que décrit la revendication 1 ou 2, si ce n'est que :
une zone de repères de marges est prévue autour de la zone de position de pages, et cette zone de repères de marges ainsi prévue est présente sur les quatre côtés de chacune des pages lorsque l'imprimante imprime, et
lorsqu'une zone de la fiche d'impression à l'unité qui est extérieure au niveau d'une extrémité, dans le premier sens, de chacune des pages est définie comme une première zone en marge, ce dispositif de production de données d'impression comporte, en outre, une portion de réduction de la taille des fiches d'impression à l'unité (43) qui est configurée pour retirer la totalité ou une partie d'une zone de la première zone en marge autre que la zone de repères de marges et pour raccourcir une longueur dans le premier sens de la fiche d'impression à l'unité.

4. Le dispositif de production de données d'impression (10) que décrit la revendication 1 ou 2, si ce n'est que :
une zone de repères de marges est prévue autour de la zone de position de pages, et cette zone de repères de marges ainsi prévue est présente sur les quatre côtés de chacune des pages lorsque l'imprimante imprime, et
lorsqu'une zone de la fiche d'impression à l'unité qui est extérieure au niveau d'une extrémité, dans le premier sens, de chacune des pages est définie comme une première zone en marge, ce dispositif de production de données d'impression comporte, en outre, une portion de réduction de la taille des fiches d'impression à l'unité (43) qui est configurée pour raccourcir une longueur dans le premier sens de la fiche d'impression à l'unité et cette réduction est une longueur qui correspond à une différence entre une longueur dans le premier sens pour chacune des pages détenues par la portion d'acquisition de mise en page et une longueur dans le premier sens pour chacune des pages incluses dans les données de soumission.

5. Le dispositif de production de données d'impression (10) que décrit l'une ou l'autre des revendications 1 à 4, si ce n'est que :
les données de soumission vont imprimer, de manière continue, des données pour un premier travail en vue d'assurer l'impression d'une page ayant une première taille de page et des données pour un deuxième travail en vue d'assurer l'impression d'une page ayant une deuxième taille de page, différente de la première taille de page, sur la fiche d'impression, en faisant appel à l'imprimante, et
la portion de détermination de la position des pages (43) change une taille de la zone de position des pages en conformité avec une longueur dans le premier sens de la taille de la première page en fixant une extrémité de l'autre extrémité, dans le deuxième sens, de la zone de position des pages, en tant qu'extrémité fixe, et détermine la position réelle de chacune des pages incluses dans les données du premier travail sur la fiche d'impression à l'unité et change une taille de la zone de position des pages en conformité avec une longueur dans le deuxième sens de la deuxième taille de page, tout en fixant une extrémité de la zone de position des pages sur le même côté que l'extrémité fixe, et détermine la position réelle de chacune des pages incluses dans les données du deuxième travail sur la fiche d'impression à l'unité.

6. Le dispositif de production de données d'impression (10) que décrit l'une ou l'autre des revendications 1 à 5, si ce n'est qu'il comporte, en outre, une portion qui détient un modèle configuré pour détenir la mise en page sous la forme d'un modèle :
et si ce n'est que la portion de détermination de position des pages (43) détermine la position réelle de chacune des pages sur la fiche d'impression à l'unité pendant l'exécution de l'impression par l'imprimante, en se basant sur un modèle qui correspond aux données de soumission parmi les modèles détenus par la portion de détention de modèles et sur les données de soumission.

7. Un procédé de production de données d'impression qui est conçu pour la production de données d'impression, qui seront transmises à une imprimante (20) qui effectue l'impression sur une fiche d'impression, en se basant sur les données de soumission, et ce procédé de production de données d'impression se compose des éléments suivants :
une étape de lecture de mise en page (S130) qui consiste à lire une mise en page, y compris une zone de position des pages pour chacune des pages dans un deuxième sens perpendiculaire à un premier sens, qui correspond au sens de l'avance de la fiche d'impression, et la zone de position des pages se trouve sur une fiche d'impression de pages qui correspond à une zone d'impression à l'unité
une étape de détermination de position des pages (S130) qui détermine une position réelle de chacune des pages sur la fiche d'impression à l'unité pendant l'exécution de l'impression par l'imprimante, et cette position réelle est déterminée en se basant sur la mise en page lue durant l'étape de lecture de la mise en page et sur les données de soumission
une étape de production d'informations sur l'imposition globale (S140) qui produit des informations sur l'imposition globale, informations qui spécifient la mise en page d'imposition pour toutes les pages que doit imprimer l'imprimante, et ces informations sur l'imposition globale qui sont ainsi produites sont basées sur la position réelle de chacune des pages ainsi déterminées durant l'étape de détermination de la position des pages et sur les données de soumission, et
une étape de matricialisation (S150) qui a pour but d'exécuter une procédure de matricialisation en faisant appel aux données de soumission qui sont basées sur les informations sur l'imposition globale pour produire les données d'impression
et si ce n'est que, durant l'étape de détermination de la position des pages (S130), une taille de la zone de position des pages est modifiée en conformité avec une longueur dans le deuxième sens de chacune des pages incluses dans les données de soumission, alors qu'une extrémité ou l'autre extrémité, dans le deuxième sens, de la zone de position de pages est fixe, en tant qu'extrémité fixe, et que la position réelle de chacune des pages sur la fiche d'impression à l'unité est déterminée, et
si ce n'est, en ce qui concerne chacune des pages sur la fiche d'impression à l'unité, que la même extrémité d'une extrémité ou de l'autre extrémité, dans le deuxième sens, de la zone de position des pages est considérée comme étant l'extrémité fixe.

8. Un support de mémorisation informatisé et non-transitoire (17) sur lequel est conservé un programme de production de données d'impression (18) qui produit des données d'impression, qui doivent être transmises à une imprimante (20) qui effectue une impression sur une fiche d'impression, en se basant sur les données de soumission, et ce programme de production de données d'impression (18) contient des instructions qui, lorsqu'elles sont exécutées par une UCT d'un ordinateur, entraînent l'exécution par l'UCT de l'ordinateur, en faisant appel à une mémoire :
d'une étape de lecture de mise en page (S130) qui consiste à lire une mise en page, y compris une zone de position des pages pour chacune des pages dans un deuxième sens perpendiculaire à un premier sens, qui correspond au sens de l'avance de la fiche d'impression, et la zone de position des pages se trouve sur une fiche d'impression de pages qui correspond à une zone d'impression à l'unité
d'une étape de détermination de position des pages (S130) qui détermine une position réelle de chacune des pages sur la fiche d'impression à l'unité pendant l'exécution de l'impression par l'imprimante, et cette position réelle est déterminée en se basant sur la mise en page lue durant l'étape de lecture de la mise en page et sur les données de soumission
d'une étape de production d'informations sur l'imposition globale (S140) qui produit des informations sur l'imposition globale, informations qui spécifient la mise en page d'imposition pour toutes les pages que doit imprimer l'imprimante, et ces informations sur l'imposition globale qui sont ainsi produites sont basées sur la position réelle de chacune des pages ainsi déterminées durant l'étape de détermination de la position des pages et sur les données de soumission, et
d'une étape de matricialisation (S150) qui a pour but d'exécuter une procédure de matricialisation en faisant appel aux données de soumission qui sont basées sur les informations sur l'imposition globale pour produire les données d'impression
et si ce n'est que, durant l'étape de détermination de la position des pages (S130), une taille de la zone de position des pages est modifiée en conformité avec une longueur dans le deuxième sens de chacune des pages incluses dans les données de soumission, alors qu'une extrémité ou l'autre extrémité, dans le deuxième sens, de la zone de position de pages est fixe, en tant qu'extrémité fixe, et que la position réelle de chacune des pages sur la fiche d'impression à l'unité est déterminée, et
si ce n'est, en ce qui concerne chacune des pages sur la fiche d'impression à l'unité, que la même extrémité d'une extrémité ou de l'autre extrémité, dans le deuxième sens, de la zone de position des pages est considérée comme étant l'extrémité fixe.

9. Un programme de production de données d'impression (18) qui produit des données d'impression, qui doivent être transmises à une imprimante (20) qui effectue une impression sur une fiche d'impression, en se basant sur les données de soumission, et ce programme de production de données d'impression (18) contient des instructions qui, lorsqu'elles sont exécutées par une UCT d'un ordinateur, entraînent l'exécution par l'UCT de l'ordinateur, en faisant appel à une mémoire :
d'une étape de lecture de mise en page (S130) qui consiste à lire une mise en page, y compris une zone de position des pages pour chacune des pages dans un deuxième sens perpendiculaire à un premier sens, qui correspond au sens de l'avance de la fiche d'impression, et la zone de position des pages se trouve sur une fiche d'impression de pages qui correspond à une zone d'impression à l'unité
d'une étape de détermination de position des pages (S130) qui détermine une position réelle de chacune des pages sur la fiche d'impression à l'unité pendant l'exécution de l'impression par l'imprimante, et cette position réelle est déterminée en se basant sur la mise en page lue durant l'étape de lecture de la mise en page et sur les données de soumission
d'une étape de production d'informations sur l'imposition globale (S140) qui produit des informations sur l'imposition globale, informations qui spécifient la mise en page d'imposition pour toutes les pages que doit imprimer l'imprimante, et ces informations sur l'imposition globale qui sont ainsi produites sont basées sur la position réelle de chacune des pages ainsi déterminées durant l'étape de détermination de la position des pages et sur les données de soumission, et
d'une étape de matricialisation (S150) qui a pour but d'exécuter une procédure de matricialisation en faisant appel aux données de soumission qui sont basées sur les informations sur l'imposition globale pour produire les données d'impression
et si ce n'est que, durant l'étape de détermination de la position des pages (S130), une taille de la zone de position des pages est modifiée en conformité avec une longueur dans le deuxième sens de chacune des pages incluses dans les données de soumission, alors qu'une extrémité ou l'autre extrémité, dans le deuxième sens, de la zone de position de pages est fixe, en tant qu'extrémité fixe, et que la position réelle de chacune des pages sur la fiche d'impression à l'unité est déterminée, et
si ce n'est, en ce qui concerne chacune des pages sur la fiche d'impression à l'unité, que la même extrémité d'une extrémité ou de l'autre extrémité, dans le deuxième sens, de la zone de position des pages est considérée comme étant l'extrémité fixe.
